# EUROPÄISCHE PATENTSCHRIFT

(11) **EP 3 682 714 B1**
(45) Veröffentlichungstag und Bekanntmachung des Hinweises auf die Patenterteilung: **08.09.2021**
(21) Anmeldenummer: 18782442.0
(22) Anmeldetag: 04.10.2018
(51) Int. Cl.: H05B 45/355, H05B 45/3725, H02M 7/02

(54) **EINGANGSLEISTUNGSMESSUNG BEI EINEM BETRIEBSGERÄT FÜR GEBÄUDETECHNIKGERÄTE**
INPUT POWER MEASUREMENT IN AN OPERATING DEVICE FOR BUILDING TECHNOLOGY DEVICES
MESURE DE LA PUISSANCE D'ENTRÉE SUR UN APPAREIL D'ALIMENTATION POUR APPAREILLAGE DOMOTIQUE

(30) Priorität: 19.10.2017 DE 102017218679; 21.12.2017 AT 28517 U; 21.03.2018 DE 102018204317
(43) Veröffentlichungstag der Anmeldung: 22.07.2020
(73) Patentinhaber: Tridonic GmbH & Co KG, 6851 Dornbirn (AT)
(72) Erfinder: AUER, Hans, 6850 Dornbirn (AT); LOCHMANN, Frank, 88147 Achberg (DE); MOHR, Martin, 6845 Hohenems (AT); TROPPACHER, Rainer, verstorben (AT); PIOSKE, Jan, 6850 Dornbirn (AT); REBHANDL, Philip, 6850 Dornbirn (AT)
(74) Vertreter: Rupp, Christian
(86) Internationale Anmeldenummer: PCT/EP2018/077041
(87) Internationale Veröffentlichungsnummer: WO 2019/076643

(56) Entgegenhaltungen:
- EP-A2- 2 026 638
- WO-A1-2014/170508
- WO-A2-2016/020213
- DE-A1- 4 009 267
- TW-A- 201 042 267
- US-A1- 2013 093 356

## Beschreibung

### 1. Gebiet der Erfindung

Die vorliegende Erfindung betrifft ein Betriebsgerät zur elektrischen Versorgung wenigstens eines Gebäudetechnikgerätes, insbesondere einer Leuchtmittelstrecke mit wenigstens einem Leuchtmittel; eine Gebäudetechnikvorrichtung, insbesondere Leuchte, mit wenigstens einem solchen erfindungsgemäßen Betriebsgerät und wenigstens einem Gebäudetechnikgerät; sowie ein Verfahren zur Messung einer Eingangsleistung eines solchen erfindungsgemäßen Betriebsgerätes.

### 2. Hintergrund

Aus dem Stand der Technik sind Betriebsgeräte zur elektrischen Versorgung von Gebäudetechnikgeräten, wie z.B. einer Leuchtmittelstrecke mit wenigstens einem Leuchtmittel bekannt; wobei ein solches Betriebsgerät wenigstens eine Konverterstufe aufweist, die dazu eingerichtet ist, eine Spannung am Ausgang des Betriebsgerätes zur elektrischen Versorgung des Gebäudetechnikgerätes bereitzustellen.

So offenbaren die DE 40 09 267 A1, US 2013/093356 A1 und EP 2 026 638 A2 jeweils ein bekanntes Betriebsgerät zur elektrischen Versorgung wenigstens eines Gebäudetechnikgerätes.

Gemäß dem Stand der Technik wird die Eingangsleistung bei einem solchen Betriebsgerät auf der Basis wenigstens einer Eigenschaft und/oder eines Steuerparameters der wenigstens einen Konverterstufe geschätzt. Zum Beispiel für den Fall, dass die wenigstens eine Konverterstufe eine aktiv getaktete Konverterstufe mit wenigstens einem Schalter und einer Energiespeichereinheit in Form einer Induktivität ist, wird die Eingangsleistung auf der Basis der Einschaltzeitdauer des wenigstens einen Schalters und der Induktivität der Konverterstufe geschätzt.

In der Praxis hat sich nun gezeigt, dass diese Art der Schätzung zur Bestimmung der Eingangsleistung eines Betriebsgerätes mit wenigstens einer Konverterstufe zur elektrischen Versorgung von Gebäudetechnikgeräten nicht ausreichend genau ist. Insbesondere bei kleinen Lasten ist diese Art der Eingangsleistungsbestimmung nicht ausreichend genau.

Im Lichte dieses Standes der Technik ist es daher eine Aufgabe der vorliegenden Erfindung, ein Betriebsgerät zur elektrischen Versorgung eines Gebäudetechnikgerätes bereitzustellen, bei dem eine genauere Bestimmung der Eingangsleistung des Betriebsgerätes ermöglicht wird. Ferner soll eine Gebäudetechnikvorrichtung mit einem solchen Gebäudetechnikgerät sowie ein Verfahren zur genaueren Bestimmung der Eingangsleistung eines solchen Betriebsgerätes bereitgestellt werden.

Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden den zentralen Gedanken der vorliegenden Erfindung in besonders vorteilhafter Weise weiter.

### 3. Ausführliche Beschreibung der Erfindung

Gemäß der vorliegenden Erfindung wird ein Betriebsgerät zur elektrischen Versorgung wenigstens eines Gebäudetechnikgerätes, insbesondere einer Leuchtmittelstrecke mit wenigstens einem Leuchtmittel, bereitgestellt; wobei das Betriebsgerät einen Eingang zum elektrischen Verbinden einer elektrischen Energieversorgung, einen Ausgang zum elektrischen Verbinden wenigstens eines Gebäudetechnikgerätes, einen elektrischen Versorgungspfad mit wenigstens einer Konverterstufe, der den Eingang und den Ausgang des Betriebsgerätes miteinander elektrisch verbindet, und eine Steuereinheit umfasst, die zur Steuerung der wenigstens einen Konverterstufe eingerichtet ist; wobei die Steuereinheit zur Eingangsleistungsmessung dazu eingerichtet ist, eine Eingangsspannung und einen Eingangsstrom des elektrischen Versorgungspfades zwischen dem Eingang des Betriebsgerätes und der wenigstens einen Konverterstufe zu messen.

Mit anderen Worten schlägt die vorliegende Erfindung vor, die Steuereinheit des Betriebsgerätes, die für die Steuerung der wenigstens einen Konverterstufe verwendet wird, zur Messung der Eingangsspannung und des Eingangsstroms des Betriebsgerätes zu verwenden, um die Eingangsleistung des Betriebsgerätes zu messen.

Somit ist das erfindungsgemäße Betriebsgerät vorteilhaft, da durch die Messung der Eingangsspannung und des Eingangsstroms des Betriebsgerätes eine genaue Messung der Eingangsleistung des Betriebsgerätes erreicht werden kann, wobei die Messung durch die zur Steuerung der wenigstens einen Konverterstufe vorgesehenen Steuereinheit des Betriebsgerätes erfolgt und folglich keine zusätzlichen Hardwarekomponenten zur Verarbeitung der Eingangsleistungsmessung erforderlich sind. Dies bietet Platz- und Kostenvorteile.

Unter dem Begriff *"Gebäudetechnikgerät"* versteht man vorzugsweise ein Gerät, das zur Änderung und/oder zur Erfassung der Umgebung eines Gebäudes, insbesondere eines Raums eines Gebäudes, eingerichtet ist. Beispiele für Gebäudetechnikgeräte sind eine Leuchtmittelstrecke mit wenigstens einem Leuchtmittel zur Einstellung und/oder Änderung der Beleuchtung; eine Jalousie zur Einstellung und/oder Änderung der Beleuchtung von außerhalb des Gebäudes durch Abschirmen wenigstens eines Fensters; eine Klimaanlage oder ein Ventilator zur Einstellung und/oder Änderung der Umgebungstemperatur im Gebäude; ein Lichtsensor zum Erfassen des Umgebungslichts; ein Anwesenheits- und/oder Bewegungssensor zum Erfassen einer Anwesenheit und/oder einer Bewegung eines Objekts, wie z.B. einer Person; ein Temperatursensor zum Erfassen einer Umgebungstemperatur und ein Rauchsensor zum Erfassen von Rauchgasen.

Das Betriebsgerät ist zur elektrischen Versorgung wenigstens eines Gebäudetechnikgerätes, insbesondere einer Leuchtmittelstrecke mit wenigstens einem Leuchtmittel eingerichtet.

Hierbei umfasst die Leuchtmittelstrecke vorzugsweise ein oder mehrere Leuchtmittel. Die Leuchtmittel sind vorzugsweise in Reihe und/oder parallel miteinander elektrisch verbunden, falls mehr als ein Leuchtmittel in der Leuchtmittelstrecke angeordnet ist. Als Leuchtmittel können alle dem Fachmann bekannten Leuchtmittel verwendet werden, deren Lichtemission durch die dem Leuchtmittel zugeführte elektrische Energie steuerbar ist. Vorzugsweise entspricht das wenigstens eine Leuchtmittel der Leuchtmittelstrecke einer Leuchtdiode (LED), wobei dann die Leuchtmittelstrecke als Leuchtdioden-Strecke mit wenigstens einer Leuchtdiode (LED-Strecke mit wenigstens einer LED) bezeichnet wird. Die Leuchtmittelstrecke kann jede Art von LED umfassen, wie z.B. organische LED, anorganische LED, LED mit Sekundäranregung usw. Vorzugsweise umfasst die Leuchtmittelstrecke unterschiedliche Arten von Leuchtmitteln oder nur eine Art von Leuchtmitteln. Die vorliegende Erfindung ist nicht auf ein bestimmtes Leuchtmittel beschränkt.

Die elektrische Energieversorgung ist erfindungsgemäß eine Wechselspannungsquelle, wie z.B. das Stromnetz. Die vorliegende Erfindung ist diesbezüglich nicht auf eine bestimmte elektrische Energieversorgung beschränkt. Unter dem Begriff "*elektrischen Versorgungspfad*" versteht man vorzugsweise den elektrischen Pfad vom Eingang des Betriebsgerätes zum Ausgang des Betriebsgerätes, in dem die elektrischen Bauelemente angeordnet sind, die dazu eingerichtet sind, ausgehend von der am Eingang zugeführten elektrischen Energie am Ausgang des Betriebsgerätes einen Strom, eine Spannung und/oder eine elektrische Energie zur elektrischen Versorgung des wenigstens einen Gebäudetechnikgerätes bereitzustellen.

Die wenigstens eine Konverterstufe umfasst oder entspricht vorzugsweise einem aktiv getakteten Konverter, insbesondere einem Schaltregler, oder einem passiven Konverter, insbesondere einem Linearregler.

Vorteilhafterweise umfasst oder entspricht die wenigstens eine Konverterstufe einem aktiv getakteten Konverter mit wenigstens einem Schalter, wie z.B. einem Transistor, und wenigstens einer Energiespeichereinheit, wie z.B. einer Induktivität, wobei der aktiv getaktete Konverter dazu eingerichtet ist, durch Taktung seines wenigstens einen Schalters die wenigstens eine Energiespeichereinheit zu laden und entladen und dadurch die am Ausgang des Konverters bereitgestellte Spannung, Strom und/oder elektrische Energie einzustellen. Erfindungsgemäß kann jeder dem Fachmann bekannte aktiv getaktete Konverter, mit oder ohne galvanische Trennung, verwendet werden.

Die wenigstens eine Konverterstufe umfasst oder entspricht erfindungsgemäß einer PFC-Schaltung (Leistungsfaktorkorrekturschaltung), die zur Einstellung eines Leistungsfaktors nahe 1, insbesondere innerhalb gesetzlicher Vorschriften in dem jeweiligen Land, eingerichtet ist.

Vorzugsweise umfasst das Betriebsgerät eine oder mehrere Konverterstufen. Falls das Betriebsgerät mehrere Konverterstufen umfasst, sind diese vorzugsweise miteinander kaskadiert elektrisch verbunden. D.h. das Betriebsgerät umfasst vorzugsweise eine Kaskadierung aus Konverterstufen, die in dem elektrischen Versorgungspfad zwischen dem Eingang und dem Ausgang des Betriebsgerätes angeordnet ist, wobei die Konverterstufen den gleichen Konvertertyp oder unterschiedliche Konvertertypen umfassen können.

Die Steuereinheit ist oder umfasst vorzugsweise ein ASIC (anwendungsspezifische integrierte Schaltung), ein Mikrokontroller oder ein Hybrid daraus. Falls die wenigstens eine Konverterstufe einen aktive getakteten Konverter mit wenigstens einem Schalter und wenigstens einer Energiespeichereinheit umfasst oder einer solchen entspricht, ist die Steuereinheit zur Steuerung des wenigstens einen Schalters eingerichtet.

Vorzugsweise ist die Steuereinheit dazu eingerichtet, die wenigstens eine Konverterstufe auf der Basis wenigstens einer Rückführgröße, wie z.B. auf der Basis des Stroms und/oder der Spannung des Gebäudetechnikgerätes, zu steuern bzw. zu regeln.

Unter dem Begriff *"Eingangsleistung"* wird vorzugsweise die am Eingang des Betriebsgerätes aufgenommene elektrische Leistung verstanden.

Unter dem Begriff *"Eingangsspannung des elektrischen Versorgungspfads"* wird vorzugsweise die dem Betriebsgerät, insbesondere dem Eingang des Betriebsgerätes, zugeführte elektrische Spannung verstanden. Die Eingangsspannung des elektrischen Versorgungspfads kann auch lediglich als *"Eingangsspannung"* bezeichnet werden.

Unter dem Begriff *"Eingangsstrom des elektrischen Versorgungspfads"* wird vorzugsweise der dem Betriebsgerät, insbesondere dem Eingang des Betriebsgerätes, zugeführte elektrische Strom verstanden. Der Eingangsstrom des elektrischen Versorgungspfads kann auch lediglich als *"Eingangsstrom"* bezeichnet werden.

Das Betriebsgerät umfasst ferner einen Gleichrichter, der in dem elektrischen Versorgungspfad zwischen dem Eingang des Betriebsgerätes und der wenigstens einen Konverterstufe angeordnet ist. Die Steuereinheit ist dazu eingerichtet, die Eingangsspannung des elektrischen Versorgungspfades zwischen dem Eingang des Betriebsgerätes und dem Gleichrichter zu messen.

Vorzugsweise umfasst der Gleichrichter eine Gleichrichterschaltung, die zur Gleichrichtung einer Spannung eingerichtet ist, wie zum Beispiel eine Zweiweggleichrichterschaltung bestehend aus zwei Dioden oder einer Vollbrückengleichrichterschaltung bestehend aus vier Dioden. Vorzugsweise entspricht der Gleichrichter einer solchen Gleichrichterschaltung. Die vorliegende Erfindung ist aber nicht auf diese zwei Gleichrichterschaltungstypen beschränkt.

Vorzugsweise umfasst der Gleichrichter einen elektrischen Filter. Ein solcher Filter kann zum Beispiel eine Kapazität in Form eines Glättungskondensator bzw. Siebungskondensator aufweisen.

Insbesondere umfasst der Gleichrichter eine Gleichrichterschaltung mit einem nachgeordneten elektrischen Filter, wie z.B. einen Glättungskondensator, der die durch die Gleichrichterschaltung gleichgerichtete Spannung glättet.

Vorzugsweise umfasst das Betriebsgerät wenigstens einen elektrischen Filter, der in dem elektrischen Versorgungspfad der wenigstens einen Konverterstufe vorgeschaltet und/oder nachgeschaltet ist.

Ferner ist die Steuereinheit vorzugsweise dazu eingerichtet, den Eingangsstrom des elektrischen Versorgungspfads zwischen dem Gleichrichter und der wenigstens einen Konverterstufe zu messen.

Mit anderen Worten ist die Steuereinheit vorzugsweise dazu eingerichtet, den Eingangsstrom ausgangsseitig zu dem Gleichrichter und eingangsseitig zu der wenigstens einen Konverterstufe zu messen.

Die Steuereinheit ist dazu eingerichtet, die Eingangsspannung zwischen dem Eingang des Betriebsgerätes und dem Gleichrichter zu messen.

Mit anderen Worten ist die Steuereinheit dazu eingerichtet, die Eingangsspannung eingangsseitig zu dem Gleichrichter zu messen.

Des Weiteren ist die Steuereinheit vorzugsweise dazu eingerichtet, die Eingangsspannung über wenigstens eine Spannungsteilereinheit zu messen. Dies ist vorteilhaft, da mit einfachen und kostengünstigen elektrischen Bauelementen die Eingangsspannung gemessen werden kann. Vorzugsweise umfasst die Spannungsteilereinheit einen Spannungsteiler, der aus zwei in Reihe elektrisch verbundenen ohmschen Widerständen gebildet ist, wobei die zu messende Spannung an dem Knoten zwischen den zwei ohmschen Widerständen abgreifbar ist. Vorzugsweise entspricht die Spannungsteilereinheit einem solchen Spannungsteiler. Erfindungsgemäß kann auch eine andere elektrische Schaltungsanordnung zur Messung der Eingangsspannung verwendet werden.

Vorzugsweise ist die Steuereinheit dazu eingerichtet, den Eingangsstrom über wenigstens eine Messwiderstandseinheit zu messen.

Dies ist vorteilhaft, da mit einfachen und kostengünstigen elektrischen Bauelementen der Eingangsstrom gemessen werden kann. Vorzugsweise umfasst die Messwiderstandseinheit wenigstens einen ohmschen Messwiderstand, wobei die an dem ohmschen Messwiderstand abfallende Spannung den Eingangsstrom wiedergibt. Vorzugsweise entspricht die Messwiderstandseinheit einem solchen ohmschen Widerstand. Ferner kann die Messwiderstandseinheit auch mehr als einen ohmschen Messwiderstand aufweisen, wobei dann die mehreren ohmschen Messwiderstände in Reihe und/oder parallel miteinander elektrisch verbunden sind, um die Messwiderstandseinheit zu bilden. Hierbei gibt die an der Anordnung aus mehreren ohmschen Widerständen abfallende Spannung den Eingangsstrom wieder. Erfindungsgemäß kann auch eine andere elektrische Schaltungsanordnung zur Messung des Eingangsstroms verwendet werden.

Vorzugsweise umfasst der Eingang des Betriebsgerätes wenigstens zwei Anschlüsse zum elektrischen Verbinden eines Phasenleiters und eines Neutralleiters, und die Steuereinheit ist vorzugsweise dazu eingerichtet, zum Messen der Eingangsspannung des elektrischen Versorgungspfads den Potentialunterschied zwischen dem Anschluss für den Phasenleiter und dem Anschluss für den Neutralleiter zu messen.

Mit anderen Worten ist die Steuereinheit vorzugsweise dazu eingerichtet, den Spannungsabfall zwischen den zwei Eingangsanschlüssen des Betriebsgerätes, insbesondere zwischen dem Eingangsanschluss für den Phasenleiter und dem Eingangsanschluss für den Neutralleiter, zu messen. Folglich ist die Steuereinheit vorzugsweise dazu eingerichtet, den Spannungsabfall am Eingang des Betriebsgerätes zu messen.

Unter dem Begriff *"Phasenleiter"* versteht man vorzugsweise den spannungsführenden Leiter, der den Strom ausgehend von der externen elektrischen Versorgung, insbesondere dem Stromnetz, zum Betriebsgerät führt, wenn das Betriebsgerät an die externe elektrische Versorgung angeschlossen ist. Dieser Leiter wird auch als *"Außenleiter"* oder *"L-Leiter"* bezeichnet.

Unter dem Begriff *"Neutralleiter"* versteht man vorzugsweise den Leiter, über den der Strom ausgehend von dem Betriebsgerät zu der externen elektrischen Versorgung zurückfließt, wenn das Betriebsgerät an die externe elektrische Versorgung angeschlossen ist. Dieser Leiter wird auch als *"N-Leiter"* bezeichnet.

Der Neutralleiter kann auch die Funktion eines Schutzleiters aufweisen. Dieser Leiter wird dann auch als *"PEN-Leiter"* bezeichnet.

Unter dem Begriff *"Schutzleiter"* wird der zur Schutzerdung eingerichtete Leiter verstanden, der mit Erde verbunden ist und über den potenzielle Fehlströme zur Erde abgeleitet werden können. Dieser Leiter wird auch als *"Erdleiter", "Erdung"* oder *"PE-Leiter"* bezeichnet.

Ferner ist vorzugsweise zwischen dem Eingang des Betriebsgerätes und der wenigstens einen Konverterstufe eine Spannungsteilereinheit mit dem Anschluss für den Phasenleiter und den Anschluss für den Neutralleiter elektrisch verbunden, und die Steuereinheit ist vorzugsweise dazu eingerichtet, den Potentialunterschied zwischen dem Anschluss für den Phasenleiter und dem Anschluss für den Neutralleiter über die Spannungsteilereinheit zu messen.

Mit anderen Worten ist vorzugsweise zwischen den zwei Eingangsanschlüssen des Betriebsgerätes eine Spannungsteilereinheit elektrisch verbunden, über die die Steuereinheit den Spannungsabfall am Eingang des Betriebsgerätes messen kann.

Vorzugsweise umfasst der Eingang des Betriebsgerätes wenigstens drei Anschlüsse zum elektrischen Verbinden eines Phasenleiters, eines Neutralleiters und eines Schutzleiters, und die Steuereinheit ist vorzugsweise dazu eingerichtet, zum Messen der Eingangsspannung des elektrischen Versorgungspfads den Potentialunterschied zwischen dem Anschluss für den Phasenleiter und dem Anschluss für den Schutzleiter zu messen und/oder den Potentialunterschied zwischen dem Anschluss für den Neutralleiter und dem Anschluss für den Schutzleiter zu messen.

Mit anderen Worten ist die Steuereinheit vorzugsweise dazu eingerichtet, den Spannungsabfall zwischen dem Eingangsanschluss für den Phasenleiter und dem Eingangsanschluss für den Schutzleiter zu messen. Zusätzlich oder alternativ ist die Steuereinheit vorzugsweise dazu eingerichtet, den Spannungsabfall zwischen dem Eingangsanschluss für den Neutralleiter und dem Eingangsanschluss für den Schutzleiter zu messen.

Ferner ist vorzugsweise zwischen dem Eingang des Betriebsgerätes und der wenigstens einen Konverterstufe eine erste Spannungsteilereinheit mit dem Anschluss für den Phasenleiter und den Anschluss für den Schutzleiter elektrisch verbunden; und die Steuereinheit ist vorzugsweise dazu eingerichtet, den Potentialunterschied zwischen dem Anschluss für den Phasenleiter und dem Anschluss für den Schutzleiter über die erste Spannungsteilereinheit zu messen. Zusätzlich oder alternativ ist vorzugsweise zwischen dem Eingang des Betriebsgerätes und der wenigstens einen Konverterstufe eine zweite Spannungsteilereinheit mit dem Anschluss für den Neutralleiter und den Anschluss für den Schutzleiter elektrisch verbunden ist und die Steuereinheit ist vorzugsweise dazu eingerichtet, den Potentialunterschied zwischen dem Anschluss für den Neutralleiter und dem Anschluss für den Schutzleiter über die zweite Spannungsteilereinheit zu messen.

Mit anderen Worten ist vorzugsweise zwischen dem Eingangsanschluss für den Phasenleiter und dem Eingangsanschluss für den Schutzleiter eine erste Spannungsteilereinheit elektrisch verbunden, über die die Steuereinheit den Spannungsabfall zwischen dem Eingangsanschluss für den Phasenleiter und dem Eingangsanschluss für den Schutzleiter messen kann. Zusätzlich oder alternativ ist vorzugsweise zwischen dem Eingangsanschluss für den Neutralleiter und dem Eingangsanschluss für den Schutzleiter eine zweite Spannungsteilereinheit elektrisch verbunden, über die die Steuereinheit den Spannungsabfall zwischen dem Eingangsanschluss für den Neutralleiter und dem Eingangsanschluss für den Schutzleiter messen kann.

Vorzugsweise umfasst der Eingang des Betriebsgerätes wenigstens zwei Anschlüsse zum elektrischen Verbinden eines Phasenleiters und eines Neutralleiters oder wenigstens drei Anschlüsse zum elektrischen Verbinden eines Phasenleiters, eines Neutralleiters und eines Schutzleiters , und die Steuereinheit ist vorzugsweise dazu eingerichtet, zum Messen des Eingangsstroms den Stromfluss durch den elektrischen Versorgungspfad ausgehend von der wenigstens einen Konverterstufe zu dem Anschluss für den Neutralleiter zu messen.

Mit anderen Worten, unabhängig davon, ob das Betriebsgerät zwei Anschlüsse für einen Phasenleiter und einen Neutralleiter oder drei Anschlüsse für einen Phasenleiter, einen Neutralleiter und einen Schutzleiter umfasst, ist die Steuereinheit vorzugsweise dazu eingerichtet, den Stromrückfluss von der wenigstens einen Konverterstufe zu dem Anschluss für den Neutralleiter zu messen.

Ferner ist vorzugsweise im elektrischen Versorgungspfad eine Messwiderstandseinheit in Reihe mit dem Anschluss für den Neutralleiter elektrisch verbunden, und die Steuereinheit ist vorzugsweise dazu eingerichtet, den Stromfluss durch den elektrischen Versorgungspfad über die Messwiderstandseinheit zu messen.

Mit anderen Worten ist vorzugsweise eine Messwiderstandseinheit in dem Stromrückflusspfad ausgehend von der wenigstens einen Konverterstufe zu dem Anschluss für den Neutralleiter angeordnet, wobei die Steuereinheit vorzugsweise dazu eingerichtet ist, mittels der Messwiderstandseinheit den Stromrückfluss ausgehend von der wenigstens einen Konverterstufe zu dem Anschluss für den Neutralleiter zu messen.

Insbesondere ist die Steuereinheit dazu eingerichtet, den Spannungsabfall an der Messwiderstandseinheit zu messen, welcher den Stromrückfluss ausgehend von der wenigstens einen Konverterstufe zu dem Anschluss für den Neutralleiter wiedergibt.

Des Weiteren umfasst das Betriebsgerät vorzugsweise einen Gleichrichter gemäß den vorstehenden Ausführungen, wobei der Gleichrichter vorzugsweise wenigstens zwei Eingangsanschlüsse und wenigstens zwei Ausgangsanschlüsse umfasst, wobei die wenigstens zwei Eingangsanschlüsse vorzugsweise mit dem Anschluss für den Phasenleiter und den Anschluss für den Neutralleiter elektrisch verbunden sind und die wenigstens zwei Ausgangsanschlüsse vorzugsweise mit der wenigstens einen Konverterstufe elektrisch verbunden sind, und wobei die Steuereinheit vorzugsweise dazu eingerichtet ist, zum Messen des Eingangsstroms den Stromfluss durch den elektrischen Versorgungspfad ausgehend von der wenigstens einen Konverterstufe zu dem potentialniedrigeren Ausgangsanschluss der wenigstens zwei Ausgangsanschlüsse des Gleichrichters zu messen.

Mit anderen Worten ist die Steuereinheit vorzugsweise dazu eingerichtet, den Stromrückfluss ausgehend von der wenigstens einen Konverterstufe zu dem potentialniedrigeren Ausgangsanschluss der wenigstens zwei Ausgangsanschlüssen des Gleichrichters an wenigstens einem Knoten in dem elektrischen Versorgungspfad zwischen dem Gleichrichter und der wenigstens einen Konverterstufe zu messen.

Zusätzlich oder alternativ kann der Strom aber auch in dem anderen Ausgangspfad des Gleichrichters gemessen werden. D.h., zusätzlich oder alternativ ist die Steuereinheit vorzugsweise dazu eingerichtet, zum Messen des Eingangsstroms den Stromfluss durch den elektrischen Versorgungspfad ausgehend von dem potentialhöheren Ausgangsanschluss der wenigstens zwei Ausgangsanschlüsse des Gleichrichters zu der wenigstens einen Konverterstufe zu messen.

Vorzugsweise ist im elektrischen Versorgungspfad zwischen dem Gleichrichter und der wenigstens einen Konverterstufe eine Messwiderstandseinheit in Reihe mit dem potentialniedrigeren Ausgangsanschluss des Gleichrichters elektrisch verbunden, und die Steuereinheit ist vorzugsweise dazu eingerichtet, den Stromfluss durch den elektrischen Versorgungspfad über die Messwiderstandseinheit zu messen.

Zusätzlich oder alternativ ist vorzugsweise im elektrischen Versorgungspfad zwischen dem Gleichrichter und der wenigstens einen Konverterstufe eine Messwiderstandseinheit in Reihe mit dem potentialhöheren Ausgangsanschluss des Gleichrichters elektrisch verbunden, und die Steuereinheit ist vorzugsweise dazu eingerichtet, den Stromfluss durch den elektrischen Versorgungspfad über die Messwiderstandseinheit zu messen.

Die Steuereinheit ist oder umfasst vorzugsweise ein ASIC, ein Mikrokontroller oder ein Hybrid daraus ist.

Vorzugsweise umfasst die Steuereinheit eine Signalaufbereitungseinheit, die zur physikalischen Signalaufbereitung bei der Messung des Eingangsstroms eingerichtet ist.

D.h., die Signalaufbereitungseinheit ist vorzugsweise in der Steuereinheit integriert.

Dies ist vorteilhaft, da aufgrund der integrierten Signalaufbereitungseinheit der Steuereinheit keine zusätzlichen Hardwarekomponenten zur Signalaufbereitung, wie z.B. zur Pegelverschiebung bzw. zum Pegel-Shiften und/oder zur Invertierung von Pegeln, erforderlich sind. Diese Integration sorgt daher für Platz- und Kostenvorteile.

Die Signalaufbereitungseinheit ist vorzugsweise dazu eingerichtet, einen den Eingangsstrom wiedergebenden gemessenen negativen Spannungswert durch eine Invertierung und vorzugsweise eine Verstärkung in einen entsprechenden den Eingangsstrom wiedergebenden positiven Spannungswert umzuwandeln. Zusätzlich oder alternativ ist die Signalaufbereitungseinheit vorzugsweise dazu eingerichtet, einen den Eingangsstrom wiedergebenden gemessenen negativen Spannungswert durch eine Pegelverschiebung in einen entsprechenden den Eingangsstrom wiedergebenden positiven Spannungswert umzuwandeln.

Vorzugsweise umfasst die Signalaufbereitungseinheit eine invertierende Verstärkerschaltung zum Invertieren und vorzugsweise Verstärken des gemessenen Spannungswertes. Zusätzlich oder alternativ umfasst die Signalaufbereitungseinheit vorzugsweise eine einstellbare Spannungsquelle oder Stromquelle zur Pegelverschiebung des gemessenen Spannungswertes.

Insbesondere umfasst die Signalaufbereitungseinheit eine invertierende Verstärkerschaltung zum Invertieren und vorzugsweise Verstärken eines gemessenen negativen Spannungswertes in einen positiven Spannungswert. Zusätzlich oder alternativ umfasst die Steuereinheit insbesondere eine einstellbare Spannungsquelle oder Stromquelle zur Pegelverschiebung eines gemessenen negativen Spannungswertes zu einem positiven Spannungswert.

Erfindungsgemäß können auch alternative Schaltungsanordnungen zum Invertieren und vorzugsweise Verstärken des gemessenen Spannungswertes und/oder alternative Schaltungsanordnungen zur Pegelverschiebung des gemessenen Spannungswertes verwendet werden.

Vorzugsweise ist die Steuereinheit dazu eingerichtet, auf der Basis der gemessenen Eingangsspannung und des gemessenen Eingangsstroms des elektrischen Versorgungspfades die folgenden Informationen zu bestimmen: Powerfaktor, Phasenlage der Eingangsspannung und/oder des Eingangsstroms, unabhängig voneinander den aktuellen Wert der Eingangsspannung und/oder des Eingangsstroms, die Frequenz der an dem Eingang anschließbaren elektrischen Energieversorgung, und/oder Eingangsleistung, insbesondere Wirkleistung und/oder Blindleistung.

D.h. die Steuereinheit ist vorzugsweise dazu eingerichtet, auf der Basis der gemessenen Eingangsspannung und des gemessenen Eingangsstroms verschiedenen Informationen hinsichtlich des Betriebsgerätes und/oder hinsichtlich der an dem Eingang des Betriebsgerätes angeschlossenen elektrischen Versorgung zu bestimmen, insbesondere zu berechnen.

Ferner umfasst das Betriebsgerät vorzugsweise eine Schnittstelle, über die die Steuereinheit die gemessene Eingangsspannung und den gemessenen Eingangsstrom, insbesondere die gemessene Eingangsleistung, nach extern kommunizieren kann. Vorzugsweise ist an die Schnittstelle ein Bus anschließbar.

D.h. das Betriebsgerät kann eine Schnittstelle zur Kommunikation nach extern aufweisen, wobei vorzugsweise an die Schnittstelle ein Kommunikationsbus angeschlossen werden kann. Die Schnittstelle ist vorzugsweise eine Schnittstelle, über die gemäß dem DALI-Standard kommuniziert werden kann. Die Schnittstelle ist vorzugsweise eine bidirektionale Schnittstelle, über die bidirektional kommuniziert werden kann. Die vorliegende Erfindung ist weder auf eine bestimmte Schnittstelle noch einen bestimmten Standard oder ein bestimmtes Protokoll zur Kommunikation beschränkt. Vorzugsweise kann die Steuereinheit über die Schnittstelle noch weitere Informationen oder Daten neben der gemessenen Eigenspannung und dem gemessenen Eingangsstrom nach extern kommunizieren und/oder Daten, wie z.B. Steuerbefehle zur Steuerung der wenigstens eine Konverterstufe, empfangen. Insbesondere kann die Steuereinheit über die Schnittstelle die vorstehend genannten auf der Basis der gemessenen Eingangsspannung und des Eingangsstroms bestimmbaren Informationen nach extern kommunizieren.

Zusätzlich oder alternativ kann die Steuereinheit dazu eingerichtet sein, über wenigstens eine Versorgungsleitung zu kommunizieren, die zur elektrischen Versorgung des Betriebsgerätes mit dem Eingang des Betriebsgerätes elektrisch verbunden ist. Die Steuereinheit ist vorzugsweise dazu eingerichtet, über die elektrische Versorgung des Betriebsgerätes durch Demodulation und/oder Modulation der dem Betriebsgerät zugeführten Versorgungsspannung zu kommunizieren. Insbesondere kann eine solche Kommunikation durch eine Ein-/Aussequenz der Versorgungsspannung erfolgen. Zum Beispiel kann die dem Betriebsgerät zugeführte Spannung gemäß einem Muster zeitweise unterbrochen werden, um eine Modulation der Versorgungsspannung zu erzielen. Die vorliegende Erfindung ist nicht auf eine bestimmte Art der Datenübertragung mittels der dem Betriebsgerät zugeführten Versorgungsspannung beschränkt.

Des Weiteren umfasst das erfindungsgemäße Betriebsgerät vorzugsweise einen EMV-Filter, der in dem elektrischen Versorgungspfad zwischen dem Eingang des Betriebsgerätes und der wenigstens einen Konverterstufe angeordnet ist, wobei die Steuereinheit zur Eingangsleistungsmessung dazu eingerichtet ist, die Eingangsspannung und den Eingangsstrom des elektrischen Versorgungspfads zwischen dem EMV-Filter und der wenigstens einen Konverterstufe zu messen.

Mit anderen Worten umfasst das Betriebsgerät, insbesondere der elektrische Versorgungspfad, einen EMV-Filter, wobei die Messung der Eingangsspannung und des Eingangsstroms in dem elektrischen Versorgungspfad nach dem EMV-Filter (ausgangsseitig zum EMV-Filter) erfolgt.

Dies ist vorteilhaft, da es bei einer Messung in dem elektrischen Versorgungspfad des Betriebsgerätes vor dem EMV-Filter (eingangsseitig zum EMV-Filter) zu elektrische Störungen ausgehend von dem Betriebsgerät zur elektrischen Energieversorgung hin, insbesondere zur Wechselspannungsquelle hin, wie z.B. zu elektrischen Störungen in das Stromnetz, kommen kann. Wenn die Messung der Eingangsspannung und des Eingangsstroms in dem elektrischen Versorgungspfad des Betriebsgerätes nach dem EMV-Filter (ausgangsseitig zum EMV-Filter) erfolgt, dann kann es bei der Messung zu keinen elektrischen Störungen ausgehend von dem Betriebsgerät zur elektrischen Energieversorgung hin kommen, da der EMV-Filter dies verhindern kann.

Unter einem EMV-Filter wird insbesondere eine elektrische Schaltung verstanden, die zur Unterdrückung von elektrischen Störungen eingerichtet ist. Insbesondere verbessert der EMV-Filter die elektromagnetische Verträglichkeit (EMV) elektrischer Geräte, wie z.B. des erfindungsgemäßen Betriebsgerätes, gegen Störungen aus der elektrischen Energieversorgung, insbesondere aus der Wechselspannungsquelle, wie z.B. dem Stromnetz. Dies entspricht einer Erhöhung der Störfestigkeit. Zusätzlich kann der EMV-Filter elektrische Störungen von elektronischen Geräte, wie z.B. des erfindungsgemäßen Betriebsgerätes, zur elektrischen Energieversorgung hin, wie z.B. in das Stromnetz, begrenzen.

Der EMV-Filter ist vorzugsweise ein passiver Filter. Vorzugsweise umfasst der EMV-Filter wenigstens eine Drossel (Induktivität) und/oder wenigstens einen Kondensator. Insbesondere ist der EMV-Filter ein Tiefpassfilter aus wenigstens einer Induktivität und/oder wenigstens einem Kondensator. Besonders vorzugsweise umfasst der EMV-Filter wenigstens zwei Kondensatoren, die zu einander parallel geschaltet sind. Die vorliegende Erfindung ist vorzugsweise nicht auf einen bestimmten EMV-Filter begrenzt und folglich kann vorzugsweise jeder dem Fachmann bekannte EMV-Filter verwendet werden.

Wenn in dem Betriebsgerät ein Gleichrichter in dem elektrischen Versorgungspfad zwischen dem Eingang des Betriebsgerätes und der wenigstens einen Konverterstufe angeordnet ist, dann ist der EMV-Filter vorzugsweise vor dem Gleichrichter in dem elektrischen Versorgungspfad angeordnet. Mit anderen Worten, der EMV-Filter ist vorzugsweise in dem elektrischen Versorgungspfades zwischen dem Eingang des Betriebsgerätes und dem Gleichrichter angeordnet.

Vorzugsweise ist die Messwiderstandseinheit im elektrischen Versorgungspfad zwischen dem EMV-Filter und der wenigstens einen Konverterstufe angeordnet.

Insbesondere ist im elektrischen Versorgungspfad die Messwiderstandseinheit über den EMV-Filter mit dem Anschluss des Betriebsgerätes für den Phasenleiter in Reihe elektrisch verbunden. D.h. die Messwiderstandseinheit ist vorzugsweise in Reihe mit dem potentialhöheren Ausgangsanschluss des EMV-Filter elektrisch verbunden. Vorzugsweise ist die Messwiderstandseinheit in Reihe mit dem potentialhöheren Eingangsanschluss der wenigstens einen Konverterstufe elektrisch verbunden. Die Steuereinheit ist vorzugsweise dazu eingerichtet, den Stromfluss durch den elektrischen Versorgungspfad über die Messwiderstandseinheit zu messen.

Mit anderen Worten ist vorzugsweise die Messwiderstandseinheit in dem Strompfad, ausgehend von dem Anschluss für den Phasenleiter zu der wenigstens einen Konverterstufe, dem EMV-Filter nachgeschaltet, wobei die Steuereinheit vorzugsweise dazu eingerichtet ist, mittels der Messwiderstandseinheit den Stromfluss, insbesondere den Wirkstrom, ausgehend von dem Anschluss für den Phasenleiter über den EMV-Filter zur wenigstens einen Konverterstufe zu messen.

Vorzugsweise ist die Steuereinheit dazu eingerichtet, auf der Basis zumindest der gemessenen Eingangsspannung; der Frequenz der elektrischen Energieversorgung, insbesondere der Frequenz der Wechselspannungsquelle; und auf der Basis von Informationen bezüglich des EMV-Filters, insbesondere bezüglich einer oder mehrerer elektronischer Komponenten des EMV-Filters, den dem Eingang des Betriebsgerätes 2 zugeführten Blindstrom, insbesondere die dem Eingang des Betriebsgerätes 2 zugeführte Blindleistung, zu bestimmen.

Der in dem elektrischen Versorgungspfad des Betriebsgerätes nach dem EMV-Filter (ausgangsseitig zu dem EMV-Filter) aufgrund der Filterung nicht mehr messbare Blindstrom kann also vorzugsweise durch die Steuereinheit auf der Basis der gemessenen Eingangsspannung; der Frequenz der an dem Eingang anschließbaren elektrischen Energieversorgung, insbesondere der Frequenz des Stromnetzes; und auf der Basis von Informationen bezüglich des EMV-Filters, wie z.B. den Werten der einen oder mehreren elektronischen Komponente des EMV-Filters, bestimmt werden, insbesondere berechnet werden.

Folglich kann der nicht messbare Blindstrom durch den EMV-Filter anhand der gemessenen Daten spannungs- und frequenzunabhängig kompensiert werden. D.h. es wird nicht ein fester Kompensationswert, der an eine bestimmte Spannung und/oder Frequenz gebunden und folglich spannungs- und/oder frequenzabhängig ist, benötigt, um den Blindstrom zu bestimmen.

Das heißt, die Steuereinheit ist dazu eingerichtet, auf der Basis der gemessenen Eingangsspannung; der Frequenz der an den Eingang des Betriebsgerätes anschließbaren elektrischen Energieversorgung; und auf der Basis von Informationen bezüglich des EMV-Filters, wie z.B. den Werten der einen oder mehreren elektronischen Komponente des EMV-Filters, den Messfehler hinsichtlich des nicht messbaren Blindstroms bei der Messung des Eingangsstroms des elektrischen Versorgungspfads zu kompensieren.

Somit kann die Steuereinheit auf der Basis der gemessenen Eingangsspannung; der Frequenz der an dem Eingang anschließbaren elektrischen Energieversorgung; und auf der Basis von Informationen bezüglich des EMV-Filters die dem Betriebsgerät eingangsseitig zugeführte Blindleistung bestimmen und folglich den Messfehler hinsichtlich des nicht messbaren Blindstroms bei der Messung der Eingangsleitung des elektrischen Versorgungspfads kompensieren.

Gemäß der vorliegenden Erfindung wird ferner eine Gebäudetechnikvorrichtung, insbesondere Leuchte, bereitgestellt; wobei die Gebäudetechnikvorrichtung wenigstens ein vorstehend beschriebenes erfindungsgemäßes Betriebsgerät und wenigstens ein Gebäudetechnikgerät, insbesondere eine Leuchtmittelstrecke mit wenigstens einem Leuchtmittel, umfasst; wobei das wenigstens eine Betriebsgerät dazu eingerichtet ist, das wenigstens eine Gebäudetechnikgerät elektrisch zu versorgen.

Wie bereits vorstehend ausgeführt, versteht man vorzugsweise unter dem Begriff *"Gebäudetechnikgerät"* ein Gerät, das zur Änderung und/oder zur Erfassung der Umgebung eines Gebäudes, insbesondere eines Raums eines Gebäudes, eingerichtet ist. Beispiele für Gebäudetechnikgeräte sind eine Leuchtmittelstrecke mit wenigstens einem Leuchtmittel zur Einstellung und/oder Änderung der Beleuchtung; eine Jalousie zur Einstellung und/oder Änderung der Beleuchtung von außerhalb des Gebäudes durch Abschirmen wenigstens eines Fensters; eine Klimaanlage oder ein Ventilator zur Einstellung und/oder Änderung der Umgebungstemperatur im Gebäude; ein Lichtsensor zum Erfassen des Umgebungslichts; ein Anwesenheits- und/oder Bewegungssensor zum Erfassen einer Anwesenheit und/oder einer Bewegung eines Objekts, wie z.B. einer Person; ein Temperatursensor zum Erfassen einer Umgebungstemperatur und ein Rauchsensor zum Erfassen von Rauchgasen.

Vorzugsweise ist das wenigstens eine Gebäudetechnikgerät eine Leuchtmittelstrecke mit wenigstens einem Leuchtmittel und folglich ist die Gebäudetechnikvorrichtung vorzugsweise eine Leuchte.

Hierbei umfasst die Leuchtmittelstrecke vorzugsweise ein oder mehrere Leuchtmittel. Die Leuchtmittel sind vorzugsweise in Reihe und/oder parallel miteinander elektrisch verbunden, falls mehr als ein Leuchtmittel in der Leuchtmittelstrecke angeordnet ist. Als Leuchtmittel können alle dem Fachmann bekannten Leuchtmittel verwendet werden, deren Lichtemission durch die dem Leuchtmittel zugeführte elektrische Energie steuerbar ist. Vorzugsweise entspricht das wenigstens eine Leuchtmittel der Leuchtmittelstrecke einer Leuchtdiode (LED), wobei dann die Leuchtmittelstrecke als Leuchtdioden-Strecke mit wenigstens einer Leuchtdiode (LED-Strecke mit wenigstens einer LED) bezeichnet wird. Die Leuchtmittelstrecke kann jede Art von LED umfassen, wie z.B. organische LED, anorganische LED, LED mit Sekundäranregung usw. Vorzugsweise umfasst die Leuchtmittelstrecke unterschiedliche Arten von Leuchtmitteln oder die gleiche Art von Leuchtmitteln. Die vorliegende Erfindung ist nicht auf ein bestimmtes Leuchtmittel beschränkt.

Vorzugsweise umfasst die Gebäudetechnikvorrichtung mehr als nur ein Betriebsgerät und/oder mehr als nur ein Gebäudetechnikgerät. Für den Fall, dass die Gebäudetechnikvorrichtung mehrere Gebäudetechnikgeräte umfasst, können diese Gebäudetechnikgeräte alle die gleich Funktion oder unterschiedliche Funktionen erfüllen. Zum Beispiel kann die Gebäudetechnikvorrichtung 1 als ein erstes Gebäudetechnikgerät eine Leuchtmittelstrecke mit einem Leuchtmittel und als ein zweites Gebäudetechnikgerät einen Anwesenheits- und/oder Bewegungssensor umfassen, um eine intelligente Leuchte zu bilden, die in Abhängigkeit der durch den Anwesenheits- und/oder Bewegungssensor erfassten Anwesenheit- und/oder Bewegung eines Objekts, wie z.B. einer Person, eine Beleuchtung durch die Leuchtmittelstrecke mit dem wenigstens einen Leuchtmittel bereitstellen kann.

Für den Fall, dass mehrere Gebäudetechnikgeräte in der Gebäudetechnikvorrichtung vorgesehen sind, können diese mehrere Gebäudetechnikgeräte durch ein erfindungsgemäßes Betriebsgerät elektrisch versorgt werden oder durch mehrere erfindungsgemäße Betriebsgeräte versorgt werden. Insbesondere kann die Anzahl an Betriebsgeräten gleich der Anzahl an Gebäudetechnikgeräten entsprechen. Die Gebäudetechnikvorrichtung kann vorzugsweise auch mehrere Betriebsgeräte und nur ein Gebäudetechnikgerät umfassen. Zum Beispiel kann die Gebäudetechnikvorrichtung als Gebäudetechnikgerät eine Leuchtmittelstrecke mit wenigstens einem Leuchtmittel aufweisen sowie als ein erstes Betriebsgerät ein Betriebsgerät für die elektrische Versorgung der Leuchtmittelstrecke im Normalbetrieb ausgehend von dem Stromnetz und als zweites Betriebsgerät ein Notfall-Betriebsgerät für die elektrische Versorgung der Leuchtmittelstrecke im Notfall bei Unterbrechung des Stromnetzes.

Gemäß der vorliegenden Erfindung wird des Weiteren ein von einem vorstehend beschriebenen Betriebsgerät zur elektrischen Versorgung wenigstens eines Gebäudetechnikgerätes, insbesondere einer Leuchtmittelstrecke mit wenigstens einem Leuchtmittel, ausgeführtes Verfahren zur Messung einer Eingangsleistung des erfindungsgemäßen Betriebsgerätes bereitgestellt; wobei gemäß dem Verfahren die Steuereinheit eine Eingangsspannung und einen Eingangsstrom des elektrischen Versorgungspfades des Betriebsgerätes zwischen dem Eingang des Betriebsgerätes und der wenigstens einen Konverterstufe misst; und die Steuereinheit die Eingangsspannung des elektrischen Versorgungspfades zwischen dem Eingang des Betriebsgerätes und dem Gleichrichter misst.

### 4. Beschreibung bevorzugter Ausführungsformen

Nachfolgend wird eine detaillierte Beschreibung der Figuren gegeben. Darin zeigt:
**Figur 1** einen schematischen Schaltplan einer bevorzugten Ausführungsform einer erfindungsgemäßen Gebäudetechnikvorrichtung und eines erfindungsgemäßen Betriebsgerätes;
**Figur 2** einen schematischen Schaltplan einer weiteren bevorzugten Ausführungsform einer erfindungsgemäßen Gebäudetechnikvorrichtung und eines erfindungsgemäßen Betriebsgerätes;
**Figur 3a** einen schematischen Schaltplan einer bevorzugten Ausführungsform einer Signalaufbereitungseinheit einer Steuereinheit eines erfindungsgemäßen Gebäudetechnikgerätes;
**Figur 3b** einen schematischen Schaltplan einer bevorzugten Ausführungsform einer Signalaufbereitungseinheit einer Steuereinheit eines erfindungsgemäßen Betriebsgerätes;
**Figur 4** einen schematischen Schaltplan einer weiteren bevorzugten Ausführungsform einer erfindungsgemäßen Gebäudetechnikvorrichtung und eines erfindungsgemäßen Betriebsgerätes; und
**Figur 5** einen schematischen Schaltplan einer weiteren bevorzugten Ausführungsform einer erfindungsgemäßen Gebäudetechnikvorrichtung und eines erfindungsgemäßen Betriebsgerätes.

In den Figuren werden sich entsprechende Elemente mit den gleichen Bezugszeichen markiert

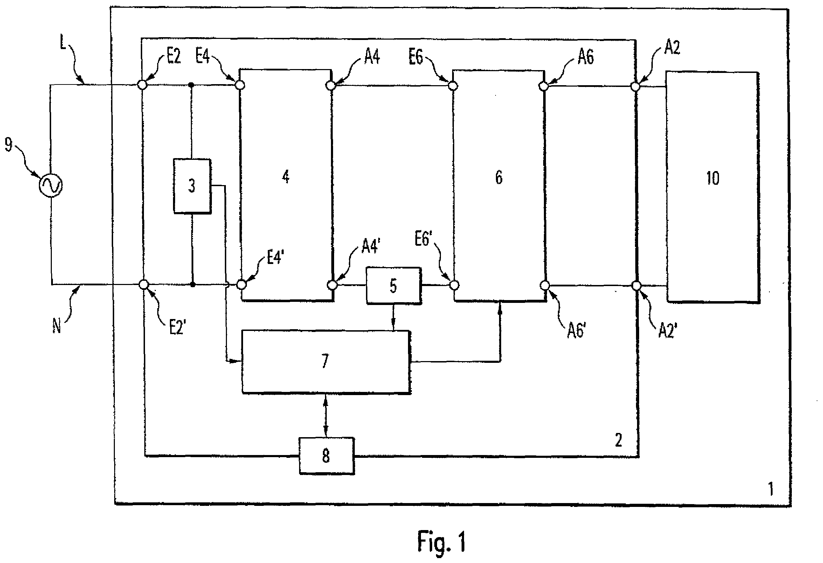

Die **Figur 1** zeigt einen schematischen Schaltplan einer bevorzugten Ausführungsform einer erfindungsgemäßen Gebäudetechnikvorrichtung und eines erfindungsgemäßen Betriebsgerätes.

Gemäß der Figur 1 umfasst eine erfindungsgemäße Gebäudetechnikvorrichtung 1 ein erfindungsgemäßes Betriebsgerät 2 und ein Gebäudetechnikgerät 10, wobei das Gebäudetechnikgerät 10 mit dem Ausgang A2, A2' des Betriebsgerätes 2 elektrische verbunden ist und folglich durch das Betriebsgerät 2 mit einer Spannung, einen Strom und/oder einer elektrischen Energie elektrisch versorgt werden kann.

Wie bereits vorstehend ausgeführt, entspricht das Gebäudetechnikgerät 10 vorzugsweise einem Gerät, das zur Änderung und/oder zur Erfassung der Umgebung eines Gebäudes, insbesondere eines Raums eines Gebäudes, eingerichtet ist. Zum Beispiele kann das Gebäudetechnikgerät 10 eine Leuchtmittelstrecke mit wenigstens einem Leuchtmittel zur Einstellung und/oder Änderung der Beleuchtung; eine Jalousie zur Einstellung und/oder Änderung der Beleuchtung von außerhalb des Gebäudes durch Abschirmen wenigstens eines Fensters; eine Klimaanlage oder ein Ventilator zur Einstellung und/oder Änderung der Umgebungstemperatur im Gebäude; ein Lichtsensor zum Erfassen des Umgebungslichts; ein Anwesenheits- und/oder Bewegungssensor zum Erfassen einer Anwesenheit und/oder einer Bewegung eines Objekts, wie z.B. einer Person; ein Temperatursensor zum Erfassen einer Umgebungstemperatur oder ein Rauchsensor zum Erfassen von Rauchgasen sein.

Vorzugsweise ist das Gebäudetechnikgerät 10 eine Leuchtmittelstrecke mit wenigstens einem Leuchtmittel.

Hierbei umfasst die Leuchtmittelstrecke vorzugsweise ein oder mehrere Leuchtmittel. Die Leuchtmittel sind vorzugsweise in Reihe und/oder parallel miteinander elektrisch verbunden, falls mehr als ein Leuchtmittel in der Leuchtmittelstrecke angeordnet ist. Als Leuchtmittel können alle dem Fachmann bekannten Leuchtmittel verwendet werden, deren Lichtemission durch die dem Leuchtmittel zugeführte elektrische Energie steuerbar ist. Vorzugsweise entspricht das wenigstens eine Leuchtmittel der Leuchtmittelstrecke einer Leuchtdiode (LED), wobei dann die Leuchtmittelstrecke als Leuchtdioden-Strecke mit wenigstens einer Leuchtdiode (LED-Strecke mit wenigstens einer LED) bezeichnet wird. Die Leuchtmittelstrecke kann jede Art von LED umfassen, wie z.B. organische LED, anorganische LED, LED mit Sekundäranregung usw. Vorzugsweise umfasst die Leuchtmittelstrecke unterschiedliche Arten von Leuchtmitteln oder die gleiche Art von Leuchtmitteln. Die vorliegende Erfindung ist nicht auf ein bestimmtes Leuchtmittel beschränkt.

Wie bereits vorstehend ausgeführt, kann die Gebäudetechnikvorrichtung 1 erfindungsgemäß auch mehr als nur ein Betriebsgerät 2 und/oder mehr als nur ein Gebäudetechnikgerät 10 umfassen.

Gemäß der Figur 1 ist die Gebäudetechnikvorrichtung 1, insbesondere der Eingang E2, E2' des Betriebsgerätes 2, mit einer externen elektrischen Energieversorgung 9 elektrisch verbunden, sodass das Betriebsgerät 2 ausgehend von der elektrischen Energieversorgung 9 elektrisch versorgt wird. Folglich ist das Betriebsgerät 2 dazu eingerichtet, das Gebäudetechnikgerät 10 ausgehend von der externen elektrischen Energieversorgung 9 elektrisch zu versorgen.

Die elektrische

Energieversorgung 9 ist eine Wechselspannungsquelle, wie z.B. das Stromnetz. Im Übrigen wird hinsichtlich der Beschreibung der elektrischen Energieversorgung 9 und des Gebäudetechnikgerätes 10 auf die entsprechenden vorstehenden Ausführungen verwiesen.

Für die nachfolgende Beschreibung wird beispielhaft, lediglich zum Zweck der Beschreibung der vorliegenden Erfindung, davon ausgegangen, dass die externe elektrische Versorgung 9 das Stromnetz ist.

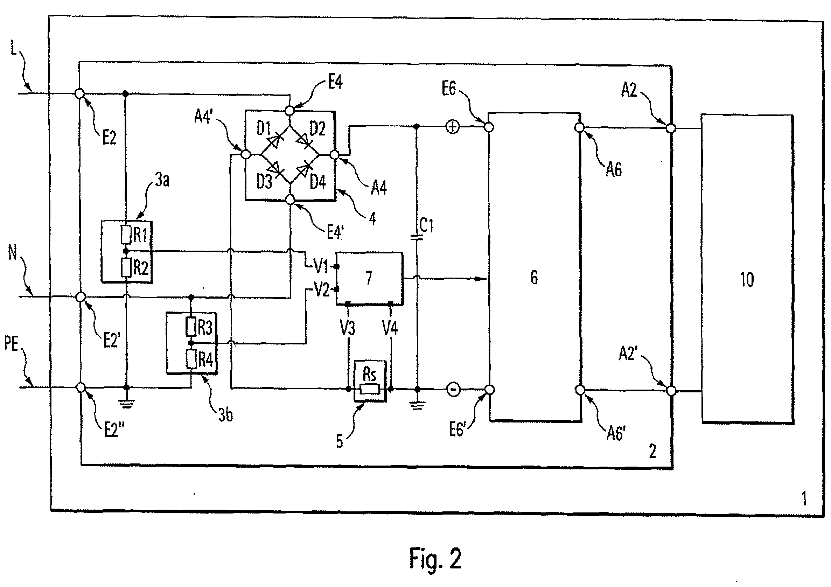

Das in der Figur 1 schematische gezeigte erfindungsgemäße Betriebsgerät 2 umfasst einen Eingang mit zwei Eingangsanschlüssen E2 und E2' und einen Ausgang mit zwei Ausgangsanschlüssen A2 und A2'. Wie bereits vorstehend ausgeführt, kann das Betriebsgerät auch mehr als zwei Eingangsanschlüsse und mehr als zwei Ausgangsanschlüsse aufweisen (vgl. nachfolgende Figur 2).

Der Eingangsanschluss E2 des Betriebsgerätes 2 ist über einen Phasenleiter L mit dem Stromnetz 9 elektrisch verbunden und stellt folglich den betragsmäßig potentialhöheren Eingangsanschluss dar. Der Eingangsanschluss E2' des Betriebsgerätes 2 ist über einen Neutralleiter N mit dem Stromnetz 9 elektrisch verbunden und stellt folglich den betragsmäßig potentialniedrigeren Eingangsanschluss dar.

Das Betriebsgerät 2 der Figur 1 umfasst ferner eine Spannungsteilereinheit 3, einen Gleichrichter 4, eine Messwiderstandseinheit 5, eine Konverterstufe 6, eine Steuereinheit 7 sowie eine Schnittstelle 8. Zur Beschreibung dieser elektrischen Bauelemente wird im Wesentlichen auf die entsprechenden vorstehenden Ausführungen zu diesen elektrischen Bauelementen verwiesen.

Der Gleichrichter 4 und die wenigstens eine Konverterstufe 6 bilden den elektrischen Versorgungspfad des Betriebsgerätes 2 der Figur 1, der ausgehend von der am Eingang, insbesondere an den Eingangsanschlüssen E2 und E2', des Betriebsgerätes 2 zugeführten elektrischen Energie am Ausgang, insbesondere an den Ausgangsanschlüssen A2 und A2', des Betriebsgerätes 2 eine Spannung, Strom und/oder elektrische Energie bereitstellt.

Wie bereits vorstehend ausgeführt kann der elektrische Versorgungspfad mehr als nur eine Konverterstufe 6 und/oder wenigstens einen elektrischen Filter umfassen. Für den Fall, dass in dem elektrischen Versorgungspfad mehrere Konverterstufen angeordnet sind, sind diese vorzugsweise in Form einer Kaskadierung angeordnet.

Gemäß der Figur 1 ist der Eingangsanschluss E4 des Gleichrichters 4 mit dem Eingangsanschluss E2 für den Phasenleiter L und der Eingangsanschluss E4' des Gleichrichters 4 mit dem Eingangsanschluss E2' für den Neutralleiter N elektrisch verbunden. Der Ausgangsanschluss A4 des Gleichrichters 4 ist mit dem Eingang der Konverterstufe 6, insbesondere mit dem Eingangsanschluss E6 der Konverterstufe 6, und der Ausgangsanschluss A4' des Gleichrichters 4 ist mit dem Eingang der Konverterstufe 6, insbesondere mit dem Eingangsanschluss E6' der Konverterstufe 6, elektrisch verbunden. Der Ausgang der Konverterstufe 6, insbesondere der Ausgangsanschluss A6 der Konverterstufe 6, ist mit dem Ausgangsanschluss A2 des Betriebsgerätes 2 und der Ausgang der Konverterstufe 6, insbesondere der Ausgangsanschluss A6' der Konverterstufe 6, ist mit dem Ausgangsanschluss A2' des Betriebsgerätes elektrisch verbunden.

Zur Messung der Eingangsspannung ist in dem Betriebsgerät der Figur 1 eine Spannungsteilereinheit 3 zwischen dem Eingangsanschluss E2 für den Phasenleiter L und dem Eingangsanschluss E2' für den Neutralleiter N geschaltet. Insbesondere ist die Spannungsteilereinheit 3 auf einer Seite mit dem Strompfad zwischen dem Eingangsanschluss E2 des Betriebsgerätes 2 für den Phasenleiter L und dem Eingangsanschluss E4 des Gleichrichters 4 und auf der anderen Seite mit dem Strompfad zwischen dem Eingangsanschluss E2' des Betriebsgerätes für den Neutralleiter N und dem Eingangsanschluss E4' des Gleichrichters 4 elektrisch verbunden.

Die Spannungsteilereinheit 3 ist insbesondere zwischen dem Eingang des Betriebsgerätes 2 und dem Eingang des Gleichrichter 4 in dem elektrischen Versorgungspfad angeordnet. D.h. die Spannungsteilereinheit 3 ist insbesondere eingangsseitig zu dem Gleichrichter 4 in dem Versorgungspfad angeordnet.

Zur Messung des Eingangsstroms ist in dem Strompfad zwischen dem Eingang E6' der Konverterstufe 6 und dem betragsmäßig potentialniedrigeren Ausgang A4' des Gleichrichters eine Messwiderstandseinheit 5 angeordnet. D.h. die Messwiderstandseinheit 5 ist in dem Stromrückflusspfad zwischen dem Gleichrichter 4 und der Konverterstufe 6 angeordnet. Der Stromrückflusspfad entspricht dem Strompfad, durch den der Strom ausgehend von dem Gebäudetechnikgerät 10 durch das Betriebsgerät 2 über den Neutralleiter N ins Stromnetz 9 zurückfließt.

Wie bereits vorstehend ausgeführt, kann zusätzlich oder alternativ eine Messwiderstandseinheit in dem Strompfad zwischen dem betragsmäßig potentialhöheren Ausgang A4 des Gleichrichters und dem Eingang E6 der Konverterstufe 6 angeordnet sein. D.h. eine Messwiderstandseinheit kann zusätzlich oder alternativ in dem Strompfad zwischen dem Gleichrichter 4 und der Konverterstufe 6 angeordnet sein, durch den der Strom ausgehend von dem Stromnetz 9 über den Phasenleiter L zu dem Gebäudetechnikgerät 10 fließt.

Die Steuereinheit 7 ist dazu eingerichtet, die wenigstens eine Konverterstufe 6 zu steuern sowie den Eingangsstrom und die Eingangsspannung zu messen. Die Steuereinheit 7 ist insbesondere dazu eingerichtet, die Konverterstufe 6 auf der Basis wenigstens einer Rückführgröße, wie z.B. auf der Basis des Stroms durch das Gebäudetechnikgerät und/oder der an dem Gebäudetechnikgerät abfallenden Spannung, zu steuern bzw. zu regeln.

Gemäß der Figur 1 ist die Steuereinheit 7 dazu eingerichtet, die Eingangsspannung mittels der Spannungsteilereinheit 3 zu messen und den Eingangsstrom mittels der Messwiderstandseinheit 5 zu messen.

Ferner umfasst das Betriebsgerät 2 eine Schnittstelle 8, über die die Steuereinheit 7 vorzugsweise nach extern, d.h. nach außerhalb des Betriebsgerätes 2 sowie vorzugsweise nach außerhalb der Gebäudetechnikvorrichtung 1, bidirektional kommunizieren kann. Die Schnittstelle 8 ist vorzugsweise eine DALI-Schnittstelle. An die Schnittstelle 8 ist vorzugsweise ein Datenbus anschließbar (in Figur 1 nicht gezeigt).

Die Steuereinheit 7 ist dazu eingerichtet, auf der Basis der gemessenen Eingangsspannung und des gemessenen Eingangsstroms die elektrische Eingangsleistung des Betriebsgerätes 2 zu bestimmen, insbesondere zu berechnen.

**Figur 2** zeigt einen schematischen Schaltplan einer bevorzugten Ausführungsform einer erfindungsgemäßen Gebäudetechnikvorrichtung und eines erfindungsgemäßen Betriebsgerätes.

Im Wesentlichen entsprechen die Gebäudetechnikvorrichtung 1 und das Betriebsgerät 2 der Figur 2 der Gebäudetechnikvorrichtung 1 und dem Betriebsgerät 2 der Figur 1, sodass die vorstehenden Ausführungen zur Figur 1 für die in der Figur 2 gezeigten Elemente entsprechend zutreffend sind und im Folgenden hauptsächlich die Unterschiede zwischen der Figur 1 und Figur 2 beschrieben werden.

Das Betriebsgerät 2 der Figur 2 umfasst nun im Vergleich zu dem Betriebsgerät 2 der Figur 1 einen zusätzlichen Eingang E2" zum Anschließen einer Schutzleitung PE.

In der Figur 2 ist die externe elektrische Versorgung nicht gezeigt. Diese kann aber über den Phasenleiter L, Neutralleiter N und Schutzleiter PE mit den Eingangsanschlüssen E2, E2' und E2" elektrisch verbunden werden. Die Figur 2 zeigt auch nicht die Schnittstelle 8 zur externen Kommunikation. Das Betriebsgerät 2 der Figur 2 kann aber eine solche Schnittstelle umfassen.

Zur Messung der Eingangsspannung sind in dem Betriebsgerät der Figur 2 eine erste Spannungsteilereinheit 3a zwischen dem Eingangsanschluss E2 für den Phasenleiter L und dem Eingangsanschluss E2" für den Schutzleiter PE und eine zweite Spannungsteilereinheit 3b zwischen dem Eingangsanschluss E2' für den Neutralleiter N und dem Eingangsanschluss E2" für den Schutzleiter PE geschaltet.

Insbesondere ist die erste Spannungsteilereinheit 3a auf einer Seite mit dem Strompfad zwischen dem Eingangsanschluss E2 des Betriebsgerätes 2 für den Phasenleiter L und dem Eingangsanschluss E4 des Gleichrichters 4 und auf der anderen Seite mit dem Eingangsanschluss E2" für den Schutzleiter PE elektrisch verbunden; und die zweite Spannungsteilereinheit 3b ist insbesondere auf einer Seite mit dem Strompfad zwischen dem Eingangsanschluss E2' des Betriebsgerätes 2 für den Neutralleiter N und dem Eingangsanschluss E4' des Gleichrichters 4 und auf der anderen Seite mit dem Eingangsanschluss E2" für den Schutzleiter PE elektrisch verbunden.

Die erste Spannungsteilereinheit 3a umfasst vorzugsweise eine Reihenschaltung aus einem ohmschen Widerstand R1 und einem ohmschen Widerstand R2 und die zweite Spannungsteilereinheit 3b umfasst vorzugsweise eine Reihenschaltung aus einem ohmschen Widerstand R3 und einem ohmschen Widerstand R4.

Die Steuereinheit 7 des Betriebsgerätes 2 der Figur 2 ist dazu eingerichtet, am Knoten zwischen den Widerständen R1 und R2 der ersten Spannungsteilereinheit 3a die Spannung V1 abzugreifen, um den Spannungsabfall bzw. den Potentialunterschied zwischen dem Eingangsanschluss E2 für den Phasenleiter L und den Eingangsanschluss E2" für den Schutzleiter PE zu messen.

Die Steuereinheit 7 des Betriebsgerätes 2 der Figur 2 ist ferner dazu eingerichtet, am Knoten zwischen den Widerständen R3 und R4 der zweiten Spannungsteilereinheit 3b die Spannung V2 abzugreifen, um den Spannungsabfall bzw. den Potentialunterscheid zwischen dem Eingangsanschluss E2' für den Neutralleiter N und den Eingangsanschluss E2" für den Schutzleiter PE zu messen.

Die Steuereinheit 7 ist dann dazu eingerichtet, auf der Basis der gemessenen Spannungen V1 und V2 die Eingangsspannung des Betriebsgerätes, d.h. den Spannungsabfall zwischen dem Eingangsanschluss E2 für den Phasenleiter L und dem Eingangsanschluss E2' für den Neutralleiter N, zu bestimmen, insbesondere zu berechnen. Somit ist die Steuereinheit 7 vorzugsweise dazu eingerichtet, mittels der Spannungsteilereinheiten 3a und 3b die Eingangsspannung des Betriebsgerätes 2 zu messen.

Die Messwiderstandseinheit 5 der Figur 2 umfasst einen ohmschen Messwiderstands Rs.

Zur Messung des Eingangsstroms ist die Steuereinheit 7 der Figur 2 vorzugsweise dazu eingerichtet, die Spannungen V3 und V4 auf beiden Seiten des Widerstands Rs zu messen, um den Spannungsabfall V3-V4 entlang des Messwiderstands Rs zu messen. Der Spannungsabfall entlang des Messwiderstands Rs gibt über das ohmsche Gesetz den Stromfluss durch den Messwiderstand Rs wieder.

Daher ist die Steuereinheit 7 vorzugsweise dazu eingerichtet, auf der Basis des Spannungsabfalls V3-V4 entlang des Messwiderstands Rs, insbesondere auf der Basis der an beiden Seiten des Messwiderstands Rs gemessenen Spannungen V3 und V4, den Eingangsstrom des Betriebsgerätes 2 zu bestimmen, insbesondere zu berechnen. Somit ist die Steuereinheit 7 vorzugsweise dazu eingerichtet, mittels der Messwiderstandseinheit 5 den Eingangsstrom des Betriebsgerätes 2 zu messen.

Der Gleichrichter 4 der Figur 2 umfasst vorzugsweise eine Vollbrückengleichrichterschaltung, welche aus den Dioden D1, D2, D3 und D4 gebildet ist.

Gemäß der Figur 2 ist vorzugsweise zwischen dem Gleichrichter 4 und der Konverterstufe 6 eine Glättungskapazität C1 angeordnet.

Der an der Messwiderstandseinheit 5 gemessene Spannungsabfall, der zu dem Eingangsstrom direkt proportional ist, kann negativ sein. Daher umfasst die Steuereinheit vorzugsweise eine Signalaufbereitungseinheit, die den gemessenen negativen Spannungswert in einen positiven Spannungswert umsetzen kann, auf dessen Basis dann die Steuereinheit den Eingangsstrom bestimmen, insbesondere berechnen, kann.

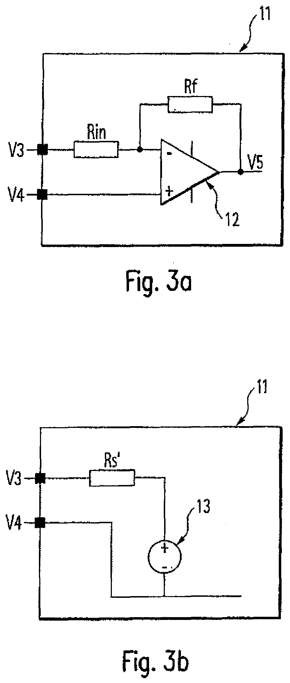

**Figuren 3a und 3b** zeigen jeweils einen schematischen Schaltplan einer bevorzugten Ausführungsform einer Signalaufbereitungseinheit einer Steuereinheit eines erfindungsgemäßen Gebäudetechnikgerätes.

Die Signalaufbereitungseinheit 11 der Figur 3a umfasst eine invertierende Verstärkerschaltung, welche aus dem Operationsverstärker 12 sowie den ohmschen Widerständen Rin und Rf gebildet ist. Die an dem Messwiderstand Rs der Messwiderstandseinheit 5 der Figur 2 gemessenen Spannungen V3 und V4 können dann der Signalaufbereitungseinheit 11 der Steuereinheit 7 zugeführt werden, um eine invertierte und vorzugsweise verstärkte Spannung V5 im Vergleich zu einem negativen Spannungsabfall an dem Messwiderstand Rs zu erhalten. Auf der Basis dieser invertierten und vorzugsweise verstärkten Spannung V5 kann die Steuereinheit 7 dann den Eingangsstrom bestimmen, insbesondere berechnen.

Die Signalaufbereitungseinheit 11 der Figur 3b umfasst eine Stromquelle 13 und einen Widerstand Rs'. Durch den Widerstand Rs' wird der an dem Messwiderstand Rs der Messwiderstandseinheit 5 der Figur 2 gemessene Spannungsabfall in einen Strom umgewandelt, welcher dann durch die Stromquelle 13 auf einen positiven Stromwert verschoben werden kann. Der so erhaltene Stromwert ist dann positiv und gibt den gemessenen Eingangsstrom des Betriebsgerätes wieder.

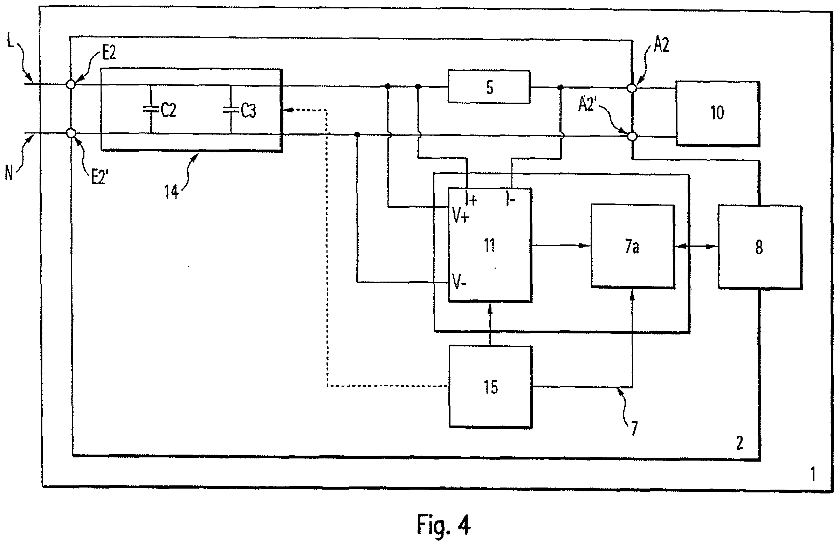

**Figur 4** zeigt einen schematischen Schaltplan einer weiteren bevorzugten Ausführungsform einer erfindungsgemäßen Gebäudetechnikvorrichtung und eines erfindungsgemäßen Betriebsgerätes.

Gemäß der Figur 4 umfasst eine erfindungsgemäße Gebäudetechnikvorrichtung 1 ein erfindungsgemäßes Betriebsgerät 2 und ein Gebäudetechnikgerät 10, wobei das Gebäudetechnikgerät 10 mit dem Ausgang A2, A2' des Betriebsgerätes 2 elektrische verbunden ist und folglich durch das Betriebsgerät 2 mit einer Spannung, einen Strom und/oder einer elektrischen Energie elektrisch versorgt werden kann.

Das Betriebsgerät 2 der Figur 4 ist zum Betrieb des Gebäudetechnikgerätes 10 eingerichtet, wobei das Gebäudetechnikgerätes 10 insbesondere eine Leuchtmittelstrecke mit wenigstens einem Leuchtmittel ist.

Das Betriebsgerät 2 umfasst vorzugsweise einen EMV-Filter 14, der in dem elektrischen Versorgungspfad des Betriebsgerätes 2 dem Eingang E2, E2'des Betriebsgerätes 2 nachgeschaltet ist und dazu eingerichtet ist, elektrische Störungen ausgehend von dem Betriebsgerät 2 in das Stromnetz zu begrenzen oder zu blockieren sowie die elektromagnetische Verträglichkeit (EMV) des Betriebsgerätes 2 gegen Störungen aus dem Stromnetz zu verbessern. Der EMV-Filter 14 ist vorzugsweise wie bereits vorstehend ausgeführt. Gemäß der Figur 4 umfasst der EMV-Filter 14 insbesondere zwei Kondensatoren C2 und C3, die miteinander parallel verbunden sind.

Das Betriebsgerät 2 umfasst ferner eine Steuereinheit 7, die zur Eingangsleistungsmessung dazu eingerichtet ist, eine Eingangsspannung und einen Eingangsstrom des elektrischen Versorgungspfads ausgangseitig des EMV-Filters 14 (in dem elektrischen Versorgungspfad nach dem EMV-Filter 14 bezüglich des Einganges E2, E2' des Betriebsgerätes) zu messen. Vorzugsweise ist die Steuereinheit 7 wie bereits vorstehend beschrieben.

Insbesondere umfasst das Betriebsgerät 2 zur Messung des Eingangsstroms eine Messwiderstandseinheit 5, die in dem elektrischen Versorgungspfad des Betriebsgerätes 2 dem EMV-Filter 14 nachgeschaltet ist. Die Messwiderstandseinheit 5 ist vorzugsweise wie bereits vorstehend beschrieben.

Gemäß der Figur 4 ist im elektrischen Versorgungspfad die Messwiderstandseinheit 5 vorzugsweise über den EMV-Filter mit dem Anschluss des Betriebsgerätes 2 für den Phasenleiter L in Reihe elektrisch verbunden. D.h. die Messwiderstandseinheit 5 ist vorzugsweise in Reihe mit dem betragsmäßig potentialhöheren Ausgangsanschluss des EMV-Filters 14 elektrisch verbunden.

Alternativ kann die Messwiderstandseinheit 5 auch über den EMV-Filter 14 mit dem Anschluss des Betriebsgerätes 2 für den Neutralleiter N in Reihe elektrisch verbunden sein. D.h. die Messwiderstandseinheit 5 kann alternativ in Reihe mit dem betragsmäßig potentialniedrigeren Ausgangsanschluss des EMV-Filters 14 elektrisch verbunden sein.

Die Steuereinheit 7 kann die Eingangsspannung in dem elektrischen Versorgungspfad des Betriebsgeräte 2 wie vorstehend beschrieben messen.

Die Steuereinheit 7 umfasst eine Verarbeitungseinheit 7a, insbesondere einen Mikrokontroller, ASIC oder ein Hybrid daraus, sowie optional eine Signalaufbereitungseinheit 11. Die Signalaufbereitungseinheit 11 ist vorzugsweise wie vorstehend ausgeführt und ist optional auch zur physikalischen Signalaufbereitung, insbesondere Verstärkung, bei der Messung der Eingangsspannung eingerichtet.

Gemäß der Figur 4 wird die durch die Signalaufbereitungseinheit 11 gemessene und aufbereitete, insbesondere verstärkte, Eingangsspannung und Eingangsstrom der Verarbeitungseinheit 7a zugeführt, die dazu eingerichtet ist, auf der Basis der zugeführten Eingangsspannung und Eingangsstrom die dem Betriebsgerät 2 eingangsseitig zugeführte Eingangsleistung, insbesondere Wirkleistung und/oder Blindleistung, zu bestimmen, insbesondere zu berechnen.

Die Steuereinheit 7, insbesondere die Verarbeitungseinheit 7a in Form eines Mikrokontrollers, ASIC oder eines Hybrids daraus, ist dazu eingerichtet, auf der Basis zumindest der gemessenen Eingangsspannung; der Frequenz der an dem Eingang E2, E2' anschließbaren elektrischen Energieversorgung (nicht gezeigt), insbesondere der Frequenz des Stromnetzes; und auf der Basis von Informationen bezüglich des EMV-Filters, insbesondere bezüglich der Werte der zwei Kondensatoren C2 und C3 des EMV-Filters 14, den dem Eingang E2, E2' des Betriebsgerätes 2 zugeführten Blindstrom, insbesondere die dem Eingang E2, E2' des Betriebsgerätes (2) zugeführte Blindleistung, zu bestimmen, insbesondere zu berechnen.

Folglich kann der nicht messbare Blindstrom durch den EMV-Filter anhand der gemessenen Daten spannungs- und frequenzunabhängig kompensiert werden. D.h. es wird nicht ein fester Kompensationswert, der an eine bestimmte Spannung und/oder Frequenz gebunden und somit spannungs- und/oder frequenzabhängig ist, benötigt, um den Blindstrom zu bestimmen.

Somit kann die Steuereinheit 7, insbesondere die Verarbeitungseinheit 7a, auf der Basis der gemessenen Eingangsspannung; der Frequenz der elektrischen Energieversorgung (nicht gezeigt); und auf der Basis von Informationen bezüglich des EMV-Filters 14, die dem Betriebsgerät eingangsseitig zugeführte Blindleistung bestimmen, insbesondere berechnen.

Das heißt, die Steuereinheit 7, insbesondere die Verarbeitungseinheit 7a, ist dazu eingerichtet, auf der Basis der gemessenen Eingangsspannung; der Frequenz der elektrischen Energieversorgung (nicht gezeigt), insbesondere der Frequenz des Stromnetzes; und auf der Basis von Informationen bezüglich des EMV-Filters 14, wie z.B. den Werten der einen oder mehreren elektronischen Komponenten (Kondensatoren C2 und C3) des EMV-Filters 14, den Messfehler hinsichtlich des nach dem EMV-Filters 14 an der Messwiderstandseinheit 5 nicht messbaren Blindstroms bei der Messung des Eingangsstroms des elektrischen Versorgungspfads zu kompensieren.

Somit kann die Steuereinheit 7, insbesondere die Verarbeitungseinheit 7a, auf der Basis der gemessenen Eingangsspannung; der Frequenz der elektrischen Energieversorgung (nicht gezeigt); und auf der Basis von Informationen bezüglich des EMV-Filters, die dem Betriebsgerät eingangsseitig zugeführte Blindleistung bestimmen und folglich den Messfehler hinsichtlich des nicht messbaren Blindstroms bei der Messung der Eingangsleitung des elektrischen Versorgungspfads kompensieren.

Das Betriebsgerät 2 umfasst vorzugsweise ferner eine Schnittstelle 8, über die die Steuereinheit 7 die gemessene Eingangsspannung und den gemessenen Eingangsstroms, insbesondere die gemessene Eingangsleistung, nach extern kommunizieren kann. An die Schnittstelle 8 ist vorzugsweise ein Bus anschließbar. Die Schnittstelle 8 ist vorzugsweise wie vorstehend ausgeführt.

Vorzugsweise führt die Signalaufbereitungseinheit 11 der Verarbeitungseinheit 7a serielle Daten zu. Die Verarbeitungseinheit 7a führt vorzugsweise der Schnittstelle 8 serielle Daten zu.

Das Betriebsgerät 2 umfasst vorzugsweise, wie bereits vorstehend ausgeführt, wenigstens eine Konverterstufe sowie optional einen Gleichrichter (beide in Figur 4 nicht gezeigt), wobei die Messung des Eingangsstroms und der Eingangsspannung in dem elektrischen Versorgungspfad des Betriebsgerätes 2 und folglich die Anordnung der Messwiderstandseinheit 5, der wenigstens einen Konverterstufe und des optionalen Gleichrichters wie vorstehend beschrieben erfolgen kann (unter der Voraussetzung, dass die Messung des Eingangsstroms und der Eingangsspannung in dem elektrischen Versorgungspfad ausgangsseitig zu dem EMV-Filter 14 (nach dem EMV-Filter 14 bezüglich des Eingangs E, E' des Betriebsgerätes 2) erfolgt).

Gemäß der Figur 4 umfasst das Betriebsgerät 2 vorzugsweise eine integrierte Niederspannungsenergieversorgung 15 zur elektrischen Versorgung der Steuereinheit 7, insbesondere der Signalaufbereitungseinheit 11 und der Verarbeitungseinheit 7a. Vorzugsweise ist die Niederspannungsenergieversorgung 15 dazu eingerichtet, die Steuereinheit 7 ausgehend von einer externen Energiequelle, wie z.B. dem Stromnetz, elektrisch zu versorgen.

Würde die Messung der Eingangsspannung und des Eingangsstroms des elektrischen Versorgungspfads des Betriebsgerätes 2 vor dem EMV-Filter 14 erfolgen, dann würde es zu Störungen ausgehend von dem Betriebsgerät 2, insbesondere ausgehend von der Niederspannungsenergieversorgung 15, über den Eingang E2, E2' ins Stromnetz (elektrische Energieversorgung) kommen. Insbesondere würden EMV-Interferenzen direkt ans Stromnetz gekoppelt sein.

Gemäß der erfindungsgemäßen Ausführungsform der Figur 4 erfolgt aber die Messung der Eingangsspannung und des Eingangsstrom des elektrischen Versorgungspfads des Betriebsgerätes 2 nach dem EMV-Filter 14, sodass die Störungen, insbesondere die Interferenzen, durch den EMV-Filter 14 geblockt werden. Dies wird in der Figur 4 durch den gestrichelten Pfeil ausgehend von der Niederspannungsenergieversorgung 15 zum EMV-Filter 14 schematisch angedeutet.

Dies hat den Vorteil, dass zumindest eine zusätzliche EMV-verträgliche Niederspannungsenergieversorgung eingespart werden kann.

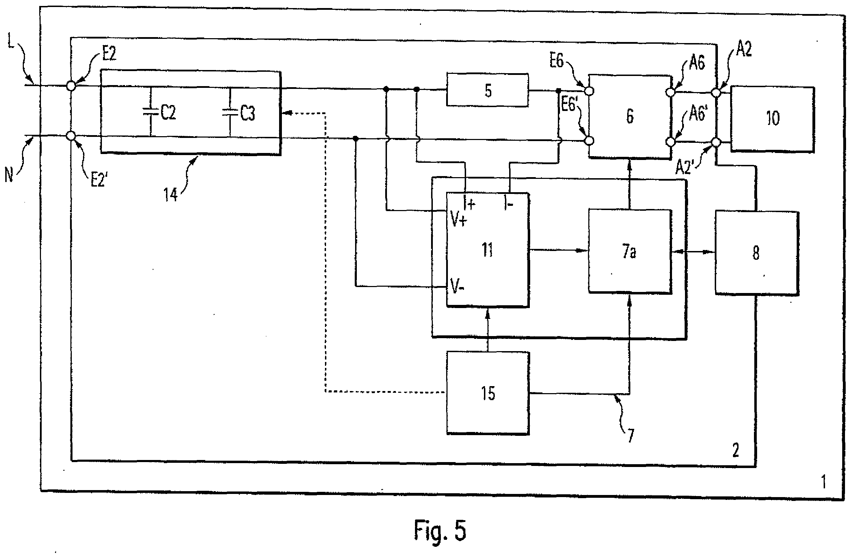

**Figur 5** zeigt einen schematischen Schaltplan einer weiteren bevorzugten Ausführungsform einer erfindungsgemäßen Gebäudetechnikvorrichtung und eines erfindungsgemäßen Betriebsgerätes.

Im Wesentlichen entsprechen die Gebäudetechnikvorrichtung 1 und das Betriebsgerät 2 der Figur 5 der Gebäudetechnikvorrichtung 1 und dem Betriebsgerät 2 der Figur 4, sodass die vorstehenden Ausführungen zur Figur 4 für die in der Figur 5 gezeigten Elemente entsprechend zutreffend sind.

Gemäß der Figur 5 umfasst das Betriebsgerät 2 wenigstens eine Konverterstufe 6. Der EMV-Filter 14 ist vorzugsweise in dem elektrischen Versorgungspfad des Betriebsgerätes 2 zwischen dem Eingang E2, E2' des Betriebsgerätes 2 und der wenigstens einen Konverterstufe 6 angeordnet.

Die Steuereinheit 7, die vorzugsweise zur Steuerung der wenigstens einen Konverterstufe 6 eingerichtet ist, ist vorzugsweise zur Eingangsleistungsmessung dazu eingerichtet, die Eingangsspannung und den Eingangsstrom des elektrischen Versorgungspfads des Betriebsgerätes 2 zwischen dem EMV-Filter 14 und der wenigstens einen Konverterstufe 6 zu messen.

Zur Messung des Eingangsstroms ist vorzugsweise die Messwiderstandseinheit 5 in dem elektrischen Versorgungspfad zwischen dem EMV-Filter 14 und der wenigstens einen Konverterstufe 6 angeordnet.

Insbesondere ist die Messwiderstandseinheit 5 auf einer Seite über den EMV-Filter 14 mit dem Anschluss E2 des Betriebsgerätes 2 für den Phasenleiter L und auf der anderen Seite mit dem betragsmäßig potentialhöheren Eingangsanschluss E6 der wenigstens einen Konverterstufe 6 in Reihe elektrisch verbunden.

Mit anderen Worten ist vorzugsweise die Messwiderstandseinheit 5 in dem Strompfad, ausgehend von dem Anschluss E2 für den Phasenleiter L zu der wenigstens einen Konverterstufe 6, dem EMV-Filter 14 nachgeschaltet und der wenigstens einen Konverterstufe 6 vorgeschaltet. Die Steuereinheit 7 ist vorzugsweise dazu eingerichtet ist, mittels der Messwiderstandseinheit 5 den Stromfluss, insbesondere den Wirkstrom, ausgehend von dem Anschluss E2 für den Phasenleiter L über den EMV-Filter 14 zur wenigstens einen Konverterstufe 6 zu messen.

Alternativ kann die Messwiderstandseinheit 5 auf einer Seite über den EMV-Filter 14 mit dem Anschluss E2' des Betriebsgerätes 2 für den Neutralleiter N und auf der anderen Seite mit dem betragsmäßig potentialniedrigeren Eingangsanschluss E6' der wenigstens einen Konverterstufe 6 in Reihe elektrisch verbunden sein.

Mit anderen Worten kann alternativ die Messwiderstandseinheit 5 in dem Stromrückflusspfad, ausgehend von der wenigstens einen Konverterstufe 6 zu dem Anschluss E2' für den Neutralleiter N, dem EMV-Filter 14 nachgeschaltet und der wenigstens einen Konverterstufe 6 vorgeschaltet sein. Die Steuereinheit 7 ist vorzugsweise dazu eingerichtet, mittels der Messwiderstandseinheit 5 den Stromrückfluss, insbesondere den Wirkstrom, ausgehend von der wenigstens einen Konverterstufe 6 zu dem Anschluss E2' für den Neutralleiter N zu messen.

Wie bereits vorstehend ausgeführt, kann das Betriebsgerät 2 zusätzlich einen Gleichrichter aufweisen, der in dem elektrischen Versorgungspfad zwischen dem EMV-Filter 14 und der wenigstens einen Konverterstufe 6 angeordnet ist (nicht gezeigt). Ist dies der Fall, dann erfolgt die Messung der Eingangsspannung und des Eingangsstroms wie vorstehend bereits für den Fall der Anwesenheit eines Gleichrichters ausgeführt.

Insbesondere wird der Eingangsstrom in dem elektrischen Versorgungspfad zwischen dem Gleichrichter und der wenigstens einen Konverterstufe 6 durch die Steuereinheit 7 gemessen. Folglich ist die Messwiderstandseinheit 5 in dem elektrischen Versorgungspfad vorzugsweise zwischen dem Gleichrichter und der wenigstens einen Konverterstufe 6 angeordnet.

Die Eingangsspannung wird insbesondere in dem elektrischen Versorgungspfad zwischen dem EMV-Filter 14 und dem Gleichrichter durch die Steuereinheit 7 gemessen.

## Patentansprüche

1. Betriebsgerät (2) zur elektrischen Versorgung wenigstens eines Gebäudetechnikgerätes (10), insbesondere einer Leuchtmittelstrecke mit wenigstens einem Leuchtmittel, wobei das Betriebsgerät (2) umfasst:
- einen Eingang (E2, E2',E2") zum elektrischen Verbinden einer Wechselspannungsquelle (9),
- einen Ausgang (A2, A2', A2") zum elektrischen Verbinden wenigstens eines Gebäudetechnikgerätes (10),
- einen elektrischen Versorgungspfad mit wenigstens einer Konverterstufe (6), welche eine PFC-Schaltung umfasst, der den Eingang (E2, E2', E2") und den Ausgang (A2, A2', A2") des Betriebsgerätes (2) miteinander elektrisch verbindet, und
- eine Steuereinheit (7), die zur Steuerung der wenigstens einen Konverterstufe (6) eingerichtet ist;
- wobei die Steuereinheit (7) zur Eingangsleistungsmessung dazu eingerichtet ist, eine Eingangsspannung und einen Eingangsstrom des elektrischen Versorgungspfades zwischen dem Eingang (E2, E2', E2") des Betriebsgerätes (2) und der wenigstens einen Konverterstufe (6) zu messen; und
- wobei das Betriebsgerät (2) ferner einen Gleichrichter (4) umfasst, der in dem elektrischen Versorgungspfad zwischen dem Eingang (E2, E2', E2") des Betriebsgerätes (2) und der wenigstens einen Konverterstufe (6) angeordnet ist, **dadurch gekennzeichnet, dass** die Steuereinheit (7) dazu eingerichtet ist, die Eingangsspannung des elektrischen Versorgungspfades zwischen dem Eingang (E2, E2', E2") des Betriebsgerätes (2) und dem Gleichrichter (4) zu messen.

2. Betriebsgerät (2) gemäß Anspruch 1,
- wobei die Steuereinheit (7) dazu eingerichtet ist, den Eingangsstrom des elektrischen Versorgungspfads zwischen dem Gleichrichter (4) und der wenigstens einen Konverterstufe (6) zu messen.

3. Betriebsgerät (2) gemäß einem der vorhergehenden Ansprüche,
- wobei die Steuereinheit (7) dazu eingerichtet ist, die Eingangsspannung über wenigstens eine Spannungsteilereinheit (3, 3a, 3b) zu messen.

4. Betriebsgerät (2) gemäß einem der vorhergehenden Ansprüche,
- wobei die Steuereinheit (7) dazu eingerichtet ist, den Eingangsstrom über wenigstens eine Messwiderstandseinheit (5) zu messen.

5. Betriebsgerät (2) gemäß einem der vorhergehenden Ansprüche, wobei
- der Eingang des Betriebsgerätes (2) wenigstens zwei Anschlüsse (E2, E2') zum elektrischen Verbinden eines Phasenleiters (L) und eines Neutralleiters (N) umfasst, und
- die Steuereinheit (7) dazu eingerichtet ist, zum Messen der Eingangsspannung des elektrischen Versorgungspfads den Potentialunterschied zwischen dem Anschluss (E2) für den Phasenleiter (L) und dem Anschluss (E2') für den Neutralleiter (N) zu messen, wobei vorzugsweise
- zwischen dem Eingang des Betriebsgerätes (2) und der wenigstens einen Konverterstufe (6) eine Spannungsteilereinheit (3) mit dem Anschluss (E2) für den Phasenleiter (L) und den Anschluss (E2') für den Neutralleiter (N) elektrisch verbunden ist, und
- die Steuereinheit (7) dazu eingerichtet ist, den Potentialunterschied zwischen dem Anschluss (E2) für den Phasenleiter (L) und dem Anschluss (E2') für den Neutralleiter (N) über die Spannungsteilereinheit (3) zu messen.

6. Betriebsgerät (2) gemäß einem der Ansprüche 1 bis 4, wobei
- der Eingang des Betriebsgerätes (2) wenigstens drei Anschlüsse (E2, E2', E2") zum elektrischen Verbinden eines Phasenleiters (L), eines Neutralleiters (N) und eines Schutzleiters (PE) umfasst, und
- die Steuereinheit (7) dazu eingerichtet ist, zum Messen der Eingangsspannung des elektrischen Versorgungspfads
- den Potentialunterschied zwischen dem Anschluss (E2) für den Phasenleiter (L) und dem Anschluss (E2") für den Schutzleiter (PE), und/oder
- den Potentialunterschied zwischen dem Anschluss (E2') für den Neutralleiter (N) und dem Anschluss (E2") für den Schutzleiter (PE)
zu messen,
wobei vorzugsweise
- zwischen dem Eingang des Betriebsgerätes (2) und der wenigstens einen Konverterstufe (6) eine erste Spannungsteilereinheit (3a) mit dem Anschluss (E2) für den Phasenleiter (L) und den Anschluss (E2") für den Schutzleiter (PE) elektrisch verbunden ist und wobei die Steuereinheit (7) dazu eingerichtet ist, den Potentialunterschied zwischen dem Anschluss (E2) für den Phasenleiter (L) und dem Anschluss (E2") für den Schutzleiter (PE) über die erste Spannungsteilereinheit (3a) zu messen; und/oder
- zwischen dem Eingang des Betriebsgerätes und der wenigstens einen Konverterstufe (6) eine zweite Spannungsteilereinheit (3b) mit dem Anschluss (E2') für den Neutralleiter (N) und den Anschluss (E2") für den Schutzleiter (PE) elektrisch verbunden ist und wobei die Steuereinheit (7) dazu eingerichtet ist, den Potentialunterschied zwischen dem Anschluss (E2') für den Neutralleiter (N) und dem Anschluss (E2") für den Schutzleiter (PE) über die zweite Spannungsteilereinheit (3b) zu messen.

7. Betriebsgerät (2) gemäß einem der vorhergehenden Ansprüche, wobei
- der Eingang des Betriebsgerätes wenigstens zwei Anschlüsse (E2, E2') zum elektrischen Verbinden eines Phasenleiters (L) und eines Neutralleiters (N) oder wenigstens drei Anschlüsse (E2, E2', E2") zum elektrischen Verbinden eines Phasenleiters (L), eines Neutralleiters (N) und eines Schutzleiters (PE) umfasst, und
- die Steuereinheit (7) dazu eingerichtet ist, zum Messen des Eingangsstroms den Stromfluss durch den elektrischen Versorgungspfad ausgehend von der wenigstens einen Konverterstufe (6) zu dem Anschluss (E2') für den Neutralleiter (N) zu messen, wobei vorzugsweise
- im elektrischen Versorgungspfad eine Messwiderstandseinheit (5) in Reihe mit dem Anschluss (E2') für den Neutralleiter (N) elektrisch verbunden ist, und
- die Steuereinheit (7) dazu eingerichtet ist, den Stromfluss durch den elektrischen Versorgungspfad über die Messwiderstandseinheit (5) zu messen.

8. Betriebsgerät (2) gemäß einem der Ansprüche 5 bis 7, wobei
- der Gleichrichter (4) wenigstens zwei Eingangsanschlüsse (E4, E4') und wenigstens zwei Ausgangsanschlüsse (A4, A4')umfasst,
- die wenigstens zwei Eingangsanschlüsse (E4, E4') mit dem Anschluss (E2) für den Phasenleiter (L) und den Anschluss (E2') für den Neutralleiter (N) elektrisch verbunden sind und die wenigstens zwei Ausgangsanschlüsse (A4, A4') mit der wenigstens einen Konverterstufe (6) elektrisch verbunden sind, und
- die Steuereinheit (7) dazu eingerichtet ist, zum Messen des Eingangsstroms den Stromfluss durch den elektrischen Versorgungspfad ausgehend von der wenigstens einen Konverterstufe (6) zu dem betragsmäßig potentialniedrigeren Ausgangsanschluss (A4') der wenigstens zwei Ausgangsanschlüsse (A4, A4') des Gleichrichters (4) zu messen,
wobei vorzugsweise
- im elektrischen Versorgungspfad zwischen dem Gleichrichter (4) und der wenigstens einen Konverterstufe (6) eine Messwiderstandseinheit (5) in Reihe mit dem betragsmäßig potentialniedrigeren Ausgangsanschluss (A4') des Gleichrichters (4) elektrisch verbunden ist, und
- die Steuereinheit (7) dazu eingerichtet ist, den Stromfluss durch den elektrischen Versorgungspfad über die Messwiderstandseinheit (5) zu messen.

9. Betriebsgerät (2) gemäß einem der vorhergehenden Ansprüche,
- wobei die Steuereinheit (7) ein ASIC, ein Mikrokontroller oder ein Hybrid daraus ist oder umfasst.

10. Betriebsgerät (2) gemäß einem der vorhergehenden Ansprüche,
- wobei die Steuereinheit (7) eine Signalaufbereitungseinheit (11) umfasst, die zur physikalischen Signalaufbereitung bei der Messung des Eingangsstroms eingerichtet ist,
- wobei vorzugsweise die Signalaufbereitungseinheit (11) dazu eingerichtet ist, einen den Eingangsstrom wiedergebenden gemessenen negativen Spannungswert durch eine Invertierung und vorzugsweise eine Verstärkung in einen entsprechenden den Eingangsstrom wiedergebenden positiven Spannungswert umzuwandeln, und/oder
- wobei vorzugsweise die Signalaufbereitungseinheit (11) dazu eingerichtet ist, einen den Eingangsstrom wiedergebenden gemessenen negativen Spannungswert durch eine Pegelverschiebung in einen entsprechenden den Eingangsstrom wiedergebenden positiven Spannungswert umzuwandeln,
- wobei vorzugsweise die Signalaufbereitungseinheit (11) eine invertierende Verstärkerschaltung (Rin, Rf, 12) zum Invertieren und vorzugsweise Verstärken des gemessenen Spannungswertes umfasst, und/oder
- wobei vorzugsweise die Signalaufbereitungseinheit (11) eine einstellbare Spannungsquelle oder Stromquelle (13) zur Pegelverschiebung des gemessenen Spannungswertes umfasst.

11. Betriebsgerät (2) gemäß einem der vorhergehenden Ansprüche,
- wobei die Steuereinheit (7) dazu eingerichtet ist, auf der Basis der gemessenen Eingangsspannung und des gemessenen Eingangsstroms des elektrischen Versorgungspfades die folgenden Informationen zu bestimmen:
- Powerfaktor,
- Phasenlage der Eingangsspannung und/oder des Eingangsstroms,
- unabhängig voneinander den aktuellen Wert der Eingangsspannung und/oder des Eingangsstroms,
- die Frequenz der an dem Eingang anschließbaren elektrischen Energieversorgung, und/oder
- Eingangsleistung, insbesondere Wirkleistung und/oder Blindleistung.

12. Betriebsgerät (2) gemäß einem der vorhergehenden Ansprüche,
- ferner mit einer Schnittstelle (8), über die die Steuereinheit (7) die gemessene Eingangsspannung und den gemessenen Eingangsstrom, insbesondere die gemessene Eingangsleistung, nach extern kommunizieren kann,
- wobei vorzugsweise an die Schnittstelle (8) ein Bus anschließbar ist.

13. Betriebsgerät (2) gemäß einem der vorhergehenden Ansprüche,
- ferner mit einem EMV-Filter (14), der in dem elektrischen Versorgungspfad zwischen dem Eingang (E2, E2') des Betriebsgerätes (2) und der wenigstens einen Konverterstufe (6) angeordnet ist,
- wobei die Steuereinheit (7) zur Eingangsleistungsmessung dazu eingerichtet ist, die Eingangsspannung und den Eingangsstrom des elektrischen Versorgungspfads zwischen dem EMV-Filter (14) und der wenigstens einen Konverterstufe (6) zu messen,
- wobei vorzugsweise die Steuereinheit (7) dazu eingerichtet ist, auf der Basis zumindest
- der gemessenen Eingangsspannung;
- der Frequenz der elektrischen Energieversorgung (9), insbesondere der Frequenz der Wechselspannungsquelle; und
- von Informationen bezüglich des EMV-Filters (14), insbesondere bezüglich einer oder mehrerer elektronischer Komponenten des EMV-Filters (14),
den dem Eingang (E2, E2') des Betriebsgerätes (2) zugeführten Blindstrom, insbesondere die dem Eingang (E2, E2') des Betriebsgerätes (2) zugeführte Blindleistung, zu bestimmen.

14. Gebäudetechnikvorrichtung (1), insbesondere Leuchte, mit
- wenigstens einem Betriebsgerät (2) gemäß einem der vorhergehenden Ansprüche, und
- wenigstens einem Gebäudetechnikgerät (10), insbesondere Leuchtmittelstrecke mit wenigstens einem Leuchtmittel,
- wobei das wenigstens eine Betriebsgerät (2) dazu eingerichtet ist, das wenigstens eine Gebäudetechnikgerät (10) elektrisch zu versorgen.

15. Verfahren zur Messung einer Eingangsleistung mit einem Betriebsgerät (2) gemäß einem der Ansprüche 1 bis 13, wobei gemäß dem Verfahren:
- die Steuereinheit (7) einen Eingangsstrom des elektrischen Versorgungspfades des Betriebsgerätes (2) zwischen dem Eingang (E2, E2', E2") des Betriebsgerätes (2) und der wenigstens einen Konverterstufe (6) misst; und
- die Steuereinheit (7) eine Eingangsspannung des elektrischen Versorgungspfades zwischen dem Eingang (E2, E2', E2") des Betriebsgerätes (2) und dem Gleichrichter (4) misst.

## Claims

1. Operating device (2) for electrically supplying at least one building technology device (10) - in particular, an illuminant line with at least one illuminant - wherein the operating device (2) comprises:
- an input (E2, E2', E2") for electrically connecting an AC voltage source (9),
- an output (A2, A2', A2") for electrically connecting at least one building technology device (10),
- an electrical supply path having at least one converter stage (6), which comprises a PFC circuit which electrically connects the input (E2, E2', E2") and the output (A2, A2', A2") of the operating device (2) to one another, and
- a control unit (7) that is configured to control the at least one converter stage (6);
- wherein the control unit (7) for input power measurement is configured to measure an input voltage and an input current of the electrical supply path between the input (E2, E2', E2") of the operating device (2) and the at least one converter stage (6); and
- wherein the operating device (2) further comprises a rectifier (4) that is arranged in the electrical supply path between the input (E2, E2', E2") of the operating device (2) and the at least one converter stage (6),
**characterized in that**
the control unit (7) is configured to measure the input voltage of the electrical supply path between the input (E2, E2', E2") of the operating device (2) and the rectifier (4).

2. Operating device (2) according to claim 1,
- wherein the control unit (7) is configured to measure the input current of the electrical supply path between the rectifier (4) and the at least one converter stage (6).

3. Operating device (2) according to one of the preceding claims,
- wherein the control unit (7) is configured to measure the input voltage via at least one voltage divider unit (3, 3a, 3b).

4. Operating device (2) according to one of the preceding claims,
- wherein the control unit (7) is configured to measure the input current via at least one measuring resistor unit (5).

5. Operating device (2) according to one of the preceding claims, wherein
- the input of the operating device (2) comprises at least two connectors (E2, E2') for electrically connecting a phase conductor (L) and a neutral conductor (N), and,
- for measuring the input voltage of the electrical supply path, the control unit (7) is configured to measure the potential difference between the connector (E2) for the phase conductor (L) and the connector (E2') for the neutral conductor (N), wherein, preferably,
- between the input of the operating device (2) and the at least one converter stage (6), a voltage divider unit (3) is electrically connected to the connector (E2) for the phase conductor (L) and the connector (E2') for the neutral conductor (S), and
- the control unit (7) is configured to measure the potential difference between the connector (E2) for the phase conductor (L) and the connector (E2') for the neutral conductor (N) via the voltage divider unit (3).

6. Operating device (2) according to one of claims 1 through 4, wherein
- the input of the operating device (2) comprises at least three connectors (E2, E2', E2") for electrically connecting a phase conductor (L), a neutral conductor (N), and a ground conductor (PE), and,
- for measuring the input voltage of the electrical supply path, the control unit (7) is configured to measure
- the potential difference between the connector (E2) for the phase conductor (L) and the connector (E2") for the ground conductor (PE), and/or
- the potential difference between the connector (E2') for the neutral conductor (N) and the connector (E2") for the ground conductor (PE),
wherein, preferably,
- between the input of the operating device (2) and the at least one converter stage (6), a first voltage divider unit (3a) is electrically connected to the connector (E2) for the phase conductor (L) and the connector (E2") for the ground conductor (PE), and wherein the control unit (7) is configured to measure the potential difference between the connector (E2) for the phase conductor (L) and the connector (E2") for the ground conductor (PE) via the first voltage divider unit (3a); and/or
- between the input of the operating device and the at least one converter stage (6), a second voltage divider unit (3b) is electrically connected to the connector (E2') for the neutral conductor (N) and the connector (E2") for the ground conductor (PE), and wherein the control unit (7) is configured to measure the potential difference between the connector (E2') for the neutral conductor (N) and the connector (E2") for the ground conductor (PE) via the second voltage divider unit (3b).

7. Operating device (2) according to one of the preceding claims, wherein
- the input of the operating device comprises at least two connectors (E2, E2') for electrically connecting a phase conductor (L) and a neutral conductor (N), or at least three connectors (E2, E2', E2") for electrically connecting a phase conductor (L), a neutral conductor (N), and a ground conductor (PE), and,
- for measuring the input current, the control unit (7) is configured to measure the current flow through the electrical supply path proceeding from the at least one converter stage (6) to the connector (E2') for the neutral conductor (N), wherein, preferably,
- in the electrical supply path, a measuring resistor unit (5) is electrically connected in series to the connector (E2') for the neutral conductor (N), and
- the control unit (7) is configured to measure the current flow through the electrical supply path via the measuring resistor unit (5).

8. Operating device (2) according to one of claims 5 through 7, wherein
- the rectifier (4) comprises at least two input connectors (E4, E4') and at least two output connectors (A4, A4'),
- the at least two input connectors (E4, E4') are electrically connected to the connector (E2) for the phase conductor (L) and the connector (E2') for the neutral conductor (N), and the at least two output connectors (A4, A4') are electrically connected to the at least one converter stage (6), and,
- for measuring the input current, the control unit (7) is configured to measure the current flow through the electrical supply path proceeding from the at least one converter stage (6) to the lower-potential - in terms of magnitude - output connector (A4') of the at least two output connectors (A4, A4') of the rectifier (4), wherein, preferably,
- in the electrical supply path between the rectifier (4) and the at least one converter stage (6), a measuring resistor unit (5) is electrically connected in series to the lower-potential - in terms of magnitude - output connector (A4') of the rectifier (4), and
- the control unit (7) is configured to measure the current flow through the electrical supply path via the measuring resistor unit (5).

9. Operating device (2) according to one of the preceding claims,
- wherein the control unit (7) is or comprises an ASIC, a microcontroller, or a hybrid thereof.

10. Operating device (2) according to one of the preceding claims,
- wherein the control unit (7) comprises a signal conditioning unit (11) which is configured for physical signal conditioning when measuring the input current,
- wherein the signal conditioning unit (11) is preferably configured to convert, via an inversion and preferably an amplification, a measured negative voltage value representing the input current into a corresponding positive voltage value representing the input current, and/or
- wherein the signal conditioning unit (11) is preferably configured to convert, via a level shifting, a measured negative voltage value representing the input current into a corresponding positive voltage value representing the input current,
- wherein the signal conditioning unit (11) preferably comprises an inverting amplifier circuit (Rin, Rf, 12) for inverting and preferably amplifying the measured voltage value, and/or
- wherein the signal conditioning unit (11) preferably comprises an adjustable voltage source or current source (13) for level shifting of the measured voltage value.

11. Operating device (2) according to one of the preceding claims,
- wherein the control unit (7) is configured to determine the following information on the basis of the measured input voltage and the measured input current of the electrical supply path:
- power factor,
- phase position of the input voltage and/or of the input current,
- the present value of the input voltage and/or of the input current, independently of one another,
- the frequency of the electrical energy supply that can be connected to the input, and/or
- input power - in particular, active power and/or reactive power.

12. Operating device (2) according to one of the preceding claims,
- also having an interface (8) via which the control unit (7) can externally communicate the measured input voltage and the measured input current - in particular, the measured input power,
- wherein a bus can preferably be connected to the interface (8).

13. Operating device (2) according to one of the preceding claims,
- also having an EMC filter (14) that is arranged in the electrical supply path between the input (E2, E2') of the operating device (2) and the at least one converter stage (6),
- wherein the control unit (7) for input power measurement is configured to measure the input voltage and the input current of the electrical supply path between the EMC filter (14) and the at least one converter stage (6),
- wherein the control unit (7) is preferably configured to determine, on the basis of at least
- the measured input voltage;
- the frequency of the electrical energy supply (9) - in particular, the frequency of the AC voltage source; and
- information regarding the EMC filter (14) - in particular, regarding one or more electronic components of the EMC filter (14),
the reactive current supplied to the input (E2, E2') of the operating device (2) - in particular, the reactive power supplied to the input (E2, E2') of the operating device (2).

14. Building technology device (1) - in particular, a luminaire, having
- at least one operating device (2) according to one of the preceding claims, and
- at least one building technology device (10) - in particular, an illuminant line having at least one illuminant,
- wherein the at least one operating device (2) is configured to electrically supply the at least one building technology device (10).

15. Method for measuring an input power with an operating device (2) according to one of claims 1 through 13,
wherein, according to the method,
- the control unit (7) measures an input current of the electrical supply path of the operating device (2) between the input (E2, E2', E2") of the operating device (2) and the at least one converter stage (6); and
- the control unit (7) measures an input voltage of the electrical supply path between the input (E2, E2', E2") of the operating device (2) and the rectifier (4).

## Revendications

1. Appareil d'alimentation (2) pour l'alimentation électrique d'au moins un appareillage domotique (10), en particulier d'une section de moyens d'éclairage comportant au moins un moyen d'éclairage, l'appareil d'alimentation (2) comprenant :
- une entrée (E2, E2', E2") pour le raccordement électrique d'une source de tension alternative (9),
- une sortie (A2, A2', A2") pour le raccordement électrique d'au moins un appareillage domotique (10),
- un trajet d'alimentation électrique comprenant au moins un étage de conversion (6), qui comprend un circuit PFC, qui raccorde électriquement l'une à l'autre l'entrée (E2, E2', E2") et la sortie (A2, A2', A2") de l'appareil d'alimentation (2) et
- une unité de commande (7), qui est conçue pour commander ledit au moins un étage de conversion (6) ;
- dans lequel l'unité de commande (7), pour la mesure de la puissance d'entrée, est conçue pour mesurer une tension d'entrée et un courant d'entrée du trajet d'alimentation électrique entre l'entrée (E2, E2', E2") de l'appareil d'alimentation (2) et ledit au moins un étage de conversion (6) ; et
- dans lequel l'appareil d'alimentation (2) comprend en outre un redresseur (4), qui est disposé dans le trajet d'alimentation électrique entre l'entrée (E2, E2', E2") de l'appareil d'alimentation (2) et ledit au moins un étage de conversion (6),
**caractérisé en ce que**
l'unité de commande (7) est conçue pour mesurer la tension d'entrée du trajet d'alimentation électrique entre l'entrée (E2, E2', E2") de l'appareil d'alimentation (2) et le redresseur (4).

2. Appareil d'alimentation (2) selon la revendication 1,
- dans lequel l'unité de commande (7) est conçue pour mesurer le courant d'entrée du trajet d'alimentation électrique entre le redresseur (4) et ledit au moins un étage de conversion (6).

3. Appareil d'alimentation (2) selon l'une quelconque des revendications précédentes,
- dans lequel l'unité de commande (7) est conçue pour mesurer la tension d'entrée par le biais d'au moins une unité de diviseur de tension (3, 3a, 3b).

4. Appareil d'alimentation (2) selon l'une quelconque des revendications précédentes,
- dans lequel l'unité de commande (7) est conçue pour mesurer le courant d'entrée par le biais d'au moins une unité de résistance de mesure (5).

5. Appareil d'alimentation (2) selon l'une quelconque des revendications précédentes, dans lequel
- l'entrée de l'appareil d'alimentation (2) comprend au moins deux raccords (E2, E2') pour le raccordement électrique d'un conducteur de phase (L) et d'un conducteur neutre (N) et
- l'unité de commande (7) est conçue, pour la mesure de la tension d'entrée du trajet d'alimentation électrique, pour mesurer la différence de potentiel entre le raccord (E2) pour le conducteur de phase (L) et le raccord (E2') pour le conducteur neutre (N),
dans lequel de préférence,
- entre l'entrée de l'appareil d'alimentation (2) et ledit au moins un étage de conversion (6), une unité de diviseur de tension (3) est raccordée électriquement au raccord (E2) pour le conducteur de phase (L) et au raccord (E2') pour le conducteur neutre (N) et
- l'unité de commande (7) est conçue pour mesurer la différence de potentiel entre le raccord (E2) pour le conducteur de phase (L) et le raccord (E2') pour le conducteur neutre (N) par le biais de l'unité de diviseur de tension (3).

6. Appareil d'alimentation (2) selon l'une quelconque des revendications 1 à 4, dans lequel
- l'entrée de l'appareil d'alimentation (2) comprend au moins trois raccords (E2, E2', E2") pour le raccordement électrique d'un conducteur de phase (L), d'un conducteur neutre (N) et d'un conducteur de protection (PE) et
- l'unité de commande (7) est conçue, pour la mesure de la tension d'entrée du trajet d'alimentation électrique, pour mesurer
- la différence de potentiel entre le raccord (E2) pour le conducteur de phase (L) et le raccord (E2") pour le conducteur de protection (PE) et/ou
- la différence de potentiel entre le raccord (E2') pour le conducteur neutre (N) et le raccord (E2") pour le conducteur de protection (PE) ,
dans lequel de préférence,
- entre l'entrée de l'appareil d'alimentation (2) et ledit au moins un étage de conversion (6), une première unité de diviseur de tension (3a) est raccordée électriquement au raccord (E2) pour le conducteur de phase (L) et au raccord (E2") pour le conducteur de protection (PE) et dans lequel l'unité de commande (7) est conçue pour mesurer la différence de potentiel entre le raccord (E2) pour le conducteur de phase (L) et le raccord (E2") pour le conducteur de protection (PE) par le biais de la première unité de diviseur de tension (3a) ; et/ou
- entre l'entrée de l'appareil d'alimentation et ledit au moins un étage de conversion (6), une deuxième unité de diviseur de tension (3b) est raccordée électriquement au raccord (E2') pour le conducteur neutre (N) et au raccord (E2") pour le conducteur de protection (PE) et dans lequel l'unité de commande (7) est conçue pour mesurer la différence de potentiel entre le raccord (E2') pour le conducteur neutre (N) et le raccord (E2") pour le conducteur de protection (PE) par le biais de la deuxième unité de diviseur de tension (3b).

7. Appareil d'alimentation (2) selon l'une quelconque des revendications précédentes, dans lequel
- l'entrée de l'appareil d'alimentation comprend au moins deux raccords (E2, E2') pour le raccordement électrique d'un conducteur de phase (L) et d'un conducteur neutre (N) ou au moins trois raccords (E2, E2', E2") pour le raccordement électrique d'un conducteur de phase (L), d'un conducteur neutre (N) et d'un conducteur de protection (PE) et
- l'unité de commande (7) est conçue, pour la mesure de la tension d'entrée, pour mesurer le flux de courant à travers le trajet d'alimentation électrique sortant dudit au moins un étage de conversion (6) vers le raccord (E2') pour le conducteur neutre (N),
dans lequel de préférence,
- dans le trajet d'alimentation électrique, une unité de résistance de mesure (5) est raccordée électriquement en série au raccord (E2') pour le conducteur neutre (N) et
- l'unité de commande (7) est conçue pour mesurer le flux de courant à travers le trajet d'alimentation électrique par le biais de l'unité de résistance de mesure (5).

8. Appareil d'alimentation (2) selon l'une quelconque des revendications 5 à 7, dans lequel
- le redresseur (4) comprend au moins deux raccords d'entrée (E4, E4') et au moins deux raccords de sortie (A4, A4'),
- lesdits au moins deux raccords d'entrée (E4, E4') sont raccordés électriquement au raccord (E2) pour le conducteur de phase (L) et au raccord (E2') pour le conducteur neutre (N) et lesdits au moins deux raccords de sortie (A4, A4') sont raccordés électriquement audit au moins un étage de conversion (6) et
- l'unité de commande (7) est conçue, pour la mesure du courant d'entrée, pour mesurer le flux de courant à travers le trajet d'alimentation électrique sortant dudit au moins un étage de conversion (6) vers le raccord de sortie (A4') à potentiel inférieur en valeur desdits au moins deux raccords de sortie (A4, A4') du redresseur (4),
dans lequel de préférence,
- dans le trajet d'alimentation électrique entre le redresseur (4) et ledit au moins un étage de conversion (6), une unité de résistance de mesure (5) est raccordée électriquement en série au raccord de sortie (A4') à potentiel inférieur en valeur du redresseur (4) et
- l'unité de commande (7) est conçue pour mesurer le flux de courant à travers le trajet d'alimentation électrique par le biais de l'unité de résistance de mesure (5).

9. Appareil d'alimentation (2) selon l'une quelconque des revendications précédentes,
- dans lequel l'unité de commande (7) est ou comprend un ASIC, un microcontrôleur ou un appareil hybride de ceux-ci.

10. Appareil d'alimentation (2) selon l'une quelconque des revendications précédentes,
- dans lequel l'unité de commande (7) comprend une unité de traitement de signaux (11), qui est conçue pour le traitement de signaux physique lors de la mesure du courant d'entrée,
- dans lequel de préférence, l'unité de traitement de signaux (11) est conçue pour convertir une valeur de tension négative mesurée représentant le courant d'entrée par une inversion et de préférence par une amplification en une valeur de tension positive correspondante représentant le courant d'entrée et/ou
- dans lequel de préférence, l'unité de traitement de signaux (11) est conçue pour convertir une valeur de tension négative mesurée représentant le courant d'entrée par un décalage de niveau en une valeur de tension positive correspondante représentant le courant d'entrée,
- dans lequel de préférence, l'unité de traitement de signaux (11) comprend un circuit amplificateur inverseur (Rin, Rf, 12) pour inverser et de préférence amplifier la valeur de tension mesurée et/ou
- dans lequel de préférence, l'unité de traitement de signaux (11) comprend une source de courant ou source de tension réglable (13) pour le décalage de niveau de la valeur de tension mesurée.

11. Appareil d'alimentation (2) selon l'une quelconque des revendications précédentes,
- dans lequel l'unité de commande (7) est conçue pour déterminer, sur la base de la tension d'entrée mesurée et du courant d'entrée mesuré du trajet d'alimentation électrique, les informations suivantes :
- le facteur de puissance,
- la position de phase de la tension d'entrée et/ou du courant d'entrée,
- la valeur réelle de la tension d'entrée et/ou celle du courant d'entrée indépendamment l'une de l'autre,
- la fréquence de l'alimentation en énergie électrique pouvant être raccordée à l'entrée et/ou
- la puissance d'entrée, en particulier la puissance active et/ou la puissance réactive.

12. Appareil d'alimentation (2) selon l'une quelconque des revendications précédentes,
- comprenant en outre une interface (8), par le biais de laquelle l'unité de commande (7) peut communiquer vers l'extérieur la tension d'entrée mesurée et le courant d'entrée mesuré, en particulier la puissance d'entrée mesurée,
- dans lequel de préférence un bus peut être raccordé à l'interface (8).

13. Appareil d'alimentation (2) selon l'une quelconque des revendications précédentes,
- comprenant en outre un filtre CEM (14), qui est disposé dans le trajet d'alimentation électrique entre l'entrée (E2, E2') de l'appareil d'alimentation (2) et ledit au moins un étage de conversion (6),
- dans lequel l'unité de commande (7) est conçue, pour la mesure de la puissance d'entrée, pour mesurer la tension d'entrée et le courant d'entrée du trajet d'alimentation électrique entre le filtre CEM (14) et ledit au moins un étage de conversion (6),
- dans lequel de préférence l'unité de commande (7) est conçue pour, sur la base d'au moins
- la tension d'entrée mesurée ;
- la fréquence de l'alimentation en énergie électrique (9), en particulier la fréquence de la source de tension alternative ; et
- d'informations concernant le filtre CEM (14), en particulier concernant un ou plusieurs composants électroniques du filtre CEM (14),
déterminer le courant réactif fourni à l'entrée (E2, E2') de l'appareil d'alimentation (2), en particulier la puissance réactive fournie à l'entrée (E2, E2') de l'appareil d'alimentation (2).

14. Dispositif domotique (1), en particulier luminaire, comprenant
- au moins un appareil d'alimentation (2) selon l'une quelconque des revendications précédentes et
- au moins un appareillage domotique (10), en particulier une section de moyens d'éclairage comportant au moins un moyen d'éclairage,
- dans lequel l'ledit au moins un appareil d'alimentation (2) est conçu pour alimenter en électricité ledit au moins un appareillage domotique (10).

15. Procédé de mesure d'une puissance d'entrée à l'aide d'un appareil d'alimentation (2) selon l'une quelconque des revendications 1 à 13,
dans lequel, conformément au procédé,
- l'unité de commande (7) mesure un courant d'entrée du trajet d'alimentation électrique de l'appareil d'alimentation (2) entre l'entrée (E2, E2', E2") de l'appareil d'alimentation (2) et ledit au moins un étage de conversion (6) ; et
- l'unité de commande (7) mesure une tension d'entrée du trajet d'alimentation électrique entre l'entrée (E2, E2', E2") de l'appareil d'alimentation (2) et le redresseur (4).
